Europäisches Patentamt

European Patent Office

Office européen des brevets

(11) Publication number: **0 091 059**
**B1**

(12) **EUROPEAN PATENT SPECIFICATION**

(45) Date of publication of patent specification: **14.02.90**

(21) Application number: **83103058.0**

(22) Date of filing: **28.03.83**

(60) Divisional application **87111894 filed on 17.08.87.**

(51) Int. Cl.⁵: **A 01 G 25/02, B 29 C 53/48**

(54) **Drip irrigation system employing adjacently arranged flow-restricting passages.**

(30) Priority: **01.04.82 US 364213**
**01.04.82 US 364229**

(43) Date of publication of application:
**12.10.83 Bulletin 83/41**

(45) Publication of the grant of the patent:
**14.02.90 Bulletin 90/07**

(84) Designated Contracting States:
**AT BE CH DE FR GB IT LI NL SE**

(56) References cited:
**DE-A-2 849 239**
**FR-A-2 386 252**
**GB-A-1 596 230**
**GB-A-2 002 487**

(73) Proprietor: **Chapin, Richard Dexter**
**368 North Colorado Avenue**
**Watertown New York 13601 (US)**

(72) Inventor: **Chapin, Richard Dexter**
**368 North Colorado Avenue**
**Watertown New York 13601 (US)**

(74) Representative: **Casalonga, Axel et al**
**BUREAU D.A. CASALONGA - JOSSE**
**Morassistrasse 8**
**D-8000 München 5 (DE)**

Courier Press, Leamington Spa, England.

## Description

This invention relates to an apparatus and a method as defined by the preambles of claims 1 and 7 for manufacturing a water distributing hose for use in a trickle irrigation or drip irrigation system.

Trickle irrigation systems are particularly adapted for the surface or subsurface watering of long rows of crops, whether on greenhouse benches or in the field.

To be practical, trickle irrigation must provide for the delivery of water at a slow uniform rate over long lengths or runs of hose. In the past various trickle irrigation systems have been tried, including pipes with small holes, pipes with various types of small outlet members, pipes with small tubes for outlets, plastic pipes with slits, tubes which ooze water through the wall, and hoses which ooze water through a sewn seam. Each type has depended on a small orifice, low pressure, friction created in a long outlet member such as a tube, or a combination of these to limit the flow through each individual outlet. However, there are disadvantages associated with each such known system. For example, the use of extremely small orifices such as holes, slits, or the like, tend to clog easily. Tube outlets and special outlet members are relatively expensive to produce and ship, particularly when considering the large quantities required. In addition, low pressure systems and tubes which provide for an oozing of the water through the wall are not capable of producing a uniform flow along the length of the hose or the like, particularly on sloping runs.

One water distributing hose which has met with success is that disclosed in U.S. Reissue Patent No. Re. 28,095, reissued July 30, 1974 to Chapin. In the reissue patent, a multi-chamber water distributing hose is shown in the context of a trickle irrigation system. Another hose which has met with success is that currently marketed by applicant under the name "TRI-WALL" hose. The "TRI-WALL" hose is an elongated water distributing hose capable of effectively watering large areas with readily available water pressures and in a manner whereby an essentially uniform watering is achieved. The pressure is substantially maintained throughout the length of the hose through a stacked arrangement of first, second and third fluid channels, which enable a maintaining of the relatively high pressure throughout the length of the hose and the reduction of this pressure directly at the point of the passing of the water from the high pressure first fluid channel through a series of first fluid-passing openings to the much smaller second fluid channel, and further pressure reduction as the water passes within the third fluid channel between a series of second fluid-passing openings and a series of discharge fluid-passing openings.

DE—A—28.49.239 reveals a method and an apparatus for continuously manufacturing a hose or tube by folding a continuous film made from a non-iron metal sheet covered on at least one face by a thermoplastic material so that the two longitudinal margins of the film overly, and by high-frequency induction welding together the two margins of the film.

The hose manufactured according to the invention is made of a thin water-impervious plastic material, such as polyethylene. The main supply channel moves the water at a relatively high pressure along the full length of the hose for discharge into the water distributing network for final discharge out of the hose itself through a number of openings or outlet stations in the outer passage. The pressure decrease within the water distributing network is such that the flow of water at the outlet stations of the network is in the form of a drip under substantially quiescent conditions.

The apparatus and the method of the invention comprise the features of the characterizing parts of claims 1 and 7. The sub-claims 2—6 and 8—12 define other features of the apparatus and method.

Basically, the hose is manufactured by moving an elongated impervious film in a given direction. The film is oriented to expose an outer surface and margin of the film. Disposed on this outer surface in a parallel array is a plurality of hot melt plastic beads. The beads are placed on the film by a conventional extrusion nozzle. The beads are positioned so that they extend along the margin, essentially parallel to the longitudinal axis of the elongated film. In certain embodiments, the nozzle extrudes the beads as part of the overall flow-regulating structure.

The film continues to move in the given direction and transports the previously deposited hot melt beads to a molding station where each of the beads is molded by deformation in a predetermined manner by a molding tooth to create a permanent depression within each of the beads, thereby molding each hot melt bead into a series of longitudinally-extending, spaced apart strips. The spaces created by the molding tooth eventually become the fluid-passing openings between the various flow channels. In another embodiment, the molding wheel is configured to create an entire flow-restricting channel with a zig-zag pattern.

The film continues to move through a guide which causes the flat material to be folded upon itself so that the interior surface of the other margin of the film comes into contact with the hot melt beads. The structure then passes through a pair of forming wheels which places the top film in intimate contact with the top of the hot melt strips causing the top film to bond to the spaced apart strips at a precise distance from the common wall of the film thus creating the flow-restricting passages.

The apparatus and method according to the present invention provide a hose which can be inexpensively produced, such being essential because of the vast quantities of hose needed to irrigate field crop installations which typically involve thousands of acres. The hose is compact, being capable of being flattened and rolled, thereby simplifying the handling, storage, shipping, installation and removal. The hose used is of a highly durable nature. In addition, large areas can be simultaneously watered without requiring excessively high pressures or large volumes of water with the distribution of the water being uniform over extremely long lengths as well as on sloping layouts and in both surface and subsurface installations.

These, together with other objects and advantages which will become subsequently apparent, reside in the details of construction and operation as more fully hereinafter described and claimed, reference being had to the accompanying drawings forming a part hereof, wherein like numerals refer to like parts throughout.

Some of the subject matter of the description and drawings is claimed in European Patent Application EP—A—0 278 049, published 17.08.88.

Figure 1 is a perspective view showing a portion of a field making use of the irrigation system comprising hoses manufactured according to the present invention.

Figure 2 is a perspective view of a portion of a hose manufactured according to the subject invention.

Figure 3 is a section taken along lines 3—3 of Figure 2.

Figure 4 is a view similar to that of Figure 2 with a portion of the hose removed to reveal the interior structure of the flow-restricting passages.

Figure 5 is a schematic view of a second embodiment of a hose manufactured according to the present invention.

Figure 6 is a schematic view useful in explaining the operation of the hose of Figure 4.

Figure 7 is a view taken along lines 7—7 of Figure 6.

Figure 8 is a view taken along lines 8—8 of Figure 6.

Figure 9 is a cross-sectional view of the embodiment of Figure 6.

Figure 10 is yet another embodiment of a hose manufactured according to the subject invention.

Figure 11 is a schematic diagram used to help explain the operation of the embodiment of Figure 10.

Figure 12 is a schematic diagram of still another embodiment of a hose manufactured according to the subject invention.

Figure 13 illustrates yet another embodiment of a hose manufactured according to the subject invention.

Figure 14 shows a modification made to the embodiment of Figure 1.

Figure 15 is a view taken along lines 15—15 of Figure 14.

Figures 16 and 17, in partial cross section, show yet another modification to the embodiment of Figure 2.

Figure 18 is a perspective view of yet another embodiment of a hose manufactured according to the subject invention.

Figure 19 is a section taken along lines 19—19 of Figure 18.

Figure 20 is a view similar to that of Figure 18 with a portion of the hose removed to reveal the interior structure of the flow-restricting passage.

Figure 21 is a schematic view of still another embodiment of a hose manufactured according to the present invention.

Figure 22 is a schematic view useful in explaining the operation of the hose of Figure 20.

Figure 23 is a view taken along lines 23—23 of Figure 18.

Figure 24 is a perspective view of a portion of a thermoplastic sheet with ridges for use in modifying the embodiment of Figure 20.

Figure 25 is a plan end view showing placement of the thermoplastic sheet in the hose of Figure 20.

Figure 26 is a perspective view of still another embodiment of a hose incorporating the sheet structure of Figure 24.

Figure 27 is a plan end view of the hose of Figure 25.

Figure 28 is a perspective view of a portion of still another embodiment of a hose manufactured according to the subject invention.

Figure 29 is a view similar to that of Figure 28 with a portion of the hose and thermoplastic sheet removed to reveal the interior structure of the flow restricting passages.

Figure 30 is a section taken along lines 30—30 of Figure 28.

Figure 31 is a perspective view showing a thermoplastic sheet with ridges for use in creating the hose of Figure 29.

Figure 32 is a schematic view of another embodiment of the hose of Figure 29.

Figure 33 is a plan end view of the hose of Figure 29.

Figure 34 is a plan end view of the hose of Figure 29 showing the hose expanded.

Figure 35 is a schematic view useful in explaining the operation of the hose of Figure 20.

Figure 36 is a plan end view of yet another embodiment of a hose manufactured according to the present invention.

Figure 37 is a view taken along lines 37—37 of Figure 36.

Figure 38 is a view taken along lines 38—38 of Figure 37.

Figure 39 is a view taken along lines 39—39 of Figure 37.

Figure 40 is a perspective diagrammatic drawing to illustrate an embodiment of a machine according to the present invention used to manufacture a hose.

Figure 41 is a view taken along lines 41—41 of Figure 40.

Figure 42 is a view taken along lines 42—42 of Figure 40.

Figure 43 is a schematic diagram illustrating the operation of the machine shown in Figure 40.

Figure 44 is a view taken along lines 44—44 of Figure 43 and is used to show the placement of a hot melt bead onto the thermoplastic film forming the outer portion of the hose.

Figure 45 is a view taken along lines 45—45 of Figure 43 and is used to schematically illustrate the formation of an identation in the hot melt bead.

Figure 46 is a view taken along lines 46—46 of Figure 43 and is used to schematically illustrate the placement of two hot melt beads and their passage through the pair of forming rolls during the manufacture of the hose.

Figure 47 is a perspective diagrammatic drawing to illustrate another embodiment of a machine according to the present invention used to manufacture a hose.

Figure 48 is a view taken along lines 48—48 of Figure 47.

Figure 49 is a view taken along lines 49—49 of Figure 47.

Figure 50 is a perspective diagrammatic drawing to illustrate an embodiment of a machine used to produce a hose such as that shown in Figure 29.

Figure 51 is an enlarged view of the molding wheel of the machine of Figure 50.

Figure 52 is an enlarged view of the molding wheel of the machine of Figure 37.

Figure 53 is an enlarged view of the molding wheel of the machine of Figure 52.

Best mode for carrying out the invention

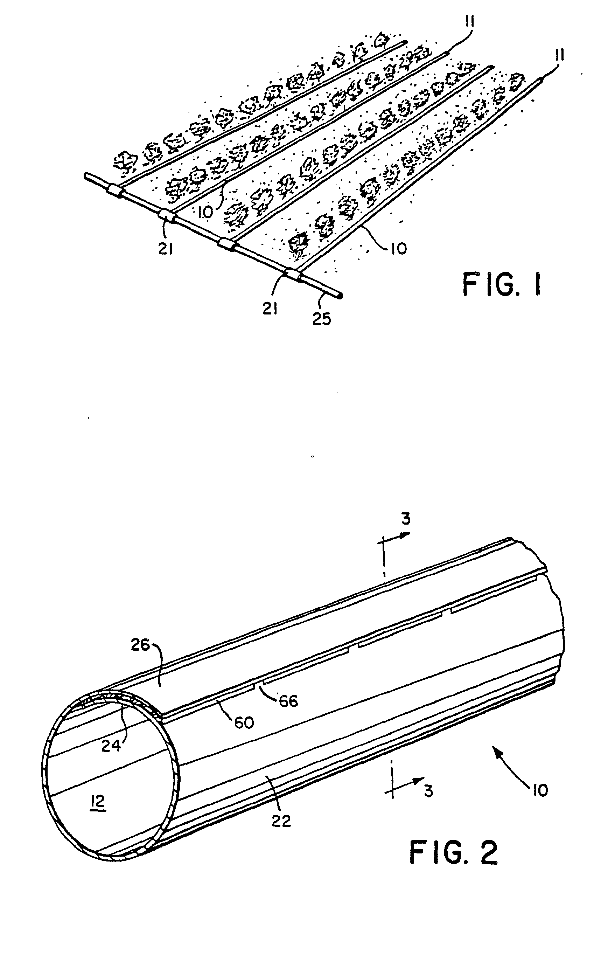

With reference to Figures 1—4, reference 10 is used to generally designate a water distributing hose manufactured according to the present invention. The hose 10 basically comprises a gross water distributing channel 12 and a fine water distributing network 14. Adjacent to channel 12 and sharing a common wall 16 is the network 14, which basically comprises a plurality of flow-restricting passages 18—20, positioned one next to the other in a common curved plane and disposed about the exterior of the main supply channel 12. Each of the passages is substantially equidistant from the longitudinal axis A of the main supply channel. As can be seen, the three fluid passages 18—20 are arranged in a generally parallel relationship throughout the length of the hose.

In use, the main supply channel 12 is connected to a source of pressurized water. This can be effected, for example, by connecting the main supply channel 12 at one end of hose 10 to a suitable fitting 21 in main 25. The other end 11 of the hose 10 is closed off to prevent escape of water from the hose. Such an arrangement has been generally illustrated in Figure 1 wherein the hose 10 is illustrated next to rows of vegetables in a large field. It will be appreciated that such an arrangement is also equally adaptable for use in green houses and home gardens.

With reference to Figures 2 through 4, an elongated layer or sheet 22 of thin water-impervious plastic material, such as a thermoplastic film, terminates in two longitudinally extending margins 24 and 26 which overlap each other in a predetermined fashion. Interposed between the overlapping margins are a series of elongated longitudinally extending strips of varying lengths and arranged in a particular manner, yet to be described, to define the fine water-distributing network 14. The strips are also made from a water-impervious plastic material.

A first set of strips 30 are positioned near the edge 32 of margin 24, so that each of the strips define an axis substantially parallel to and equidistant from the longitudinal axis A of the hose 10. The ends 34 of the strips are periodically spaced from each other to define inlet stations as a series of fluid-passing openings 36 therein. The frequency of the inlet stations typically ranges from a few inches to several feet throughout the full length of the hose. The inlet stations or first fluid-passing openings 36 are positioned so that they form a means of fluid communication between the main supply channel 12 and the first flow-restricting passage 18 of the network 14. The spaces between the strips 30 define the first inlet stations 36, and the strips 30, in effect, define a common wall 33 between the main supply channel 12 and the passage 18.

In like manner, a second set of strips 40 is positioned near to, but spaced from, the wall 33 defined by strips 30. The second set of strips also has its ends 44 spaced from each other to define a further set of fluid-passing openings or inlet stations 46, to form a means of fluid communication between the first passage 18 and the second flow-restricting passage 19. Thus, the second fluid-passing openings 46 are positioned somewhere along the common wall 43 between the first and second passages 18 and 19 as defined by the strips 40. The second fluid-passing openings 46 generally have substantially the same spacing between them as the spacing formed between the first fluid-passing openings or inlet stations 36. In actual practice, the spacing of the second fluid-passing openings 46 can vary from a few inches up to several feet.

Additionally, a third set of strips 50 is positioned near to, but spaced from, the wall 43 defined by strips 40. The third set of strips also has its ends 54 spaced from each other to define a third set of fluid-passing openings or inlet stations 56 to form a means of fluid communication between the second passage and the third flow-restricting passage 20. Thus, the third fluid-passing openings 56 are positioned somewhere along the common wall 53 between the second and third passages 19 and 20 as defined by the strips 50. The third fluid-passing openings 56 generally have substantially the same spacing between them as the spacing formed between the first fluid-passing openings 36.

Finally, a fourth set of strips 60 is positioned near the edge 62 of the margin 26 so that the strips define an axis substantially parallel to the longitudinal axis A of the hose 10. The placement of the strips 60 is such that they are positioned near to, but spaced from, the wall 53 defined by strips 50. The ends 64 of the strips are spaced from each other to define a fourth series of fluid discharge openings or outlet stations 66 to provide for fluid communication between the third passage and the exterior of the hose. In the preferred embodiment, the spacing between the outlet stations 66 is substantially the same as that between the third inlet stations 56.

In the preferred embodiment, the inlet and outlet stations 36, 46, 56, and 66, which may also be referred to as cross passageways, are substantially of a rectangular cross section and precisely formed by the positioning of the strips between the overlapping margins 24 and 26. The size of the outlets at each station is chosen so that there is a minimum chance of clogging as water passes through the station.

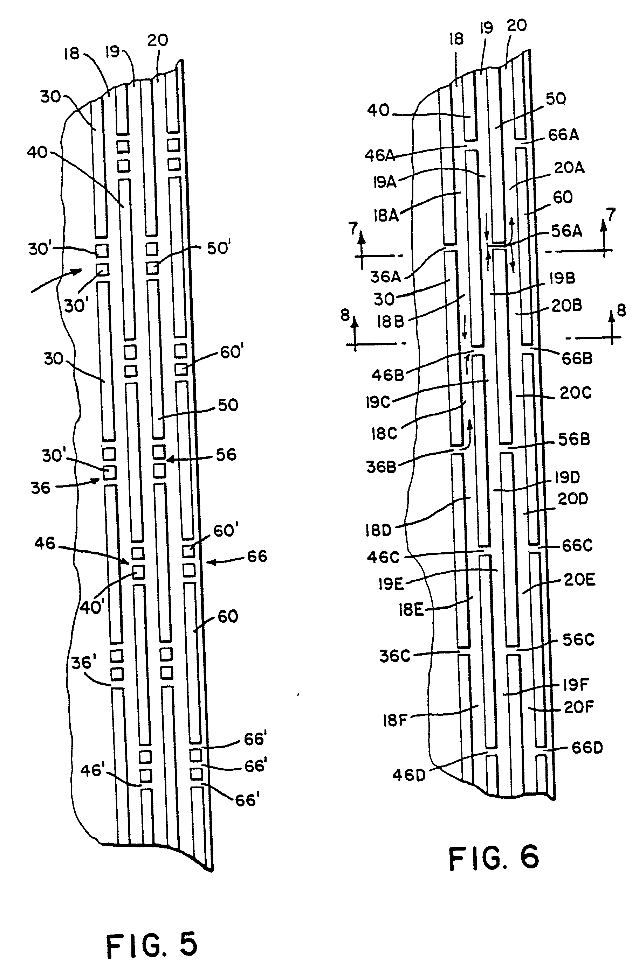

For the purposes of simplifying the presentation, the fluid-passing stations 36, 46, 56, and 66 in Figures 1—4 are shown in the context of a less preferred embodiment as a single opening. However, in a more preferred embodiment, such as that shown in Figure 5, three or more openings are used close together to comprise each station. By example, the three openings 66' constitute one fluid-passing station which provides multiple openings at each station so that if one opening should clog, the other two openings can carry the flow through the station.

It is understood that a larger number of closely spaced fluid-passing openings may constitute the first, second and third inlet stations 36, 46 and 56 and the discharge stations 66 as long as the total cross-sectional area of the openings associated with each station exceeds a minimum size so that there is a minimum amount of clogging across the station.

In the preferred embodiment, having 8 inches (20 cm) between the centers of like fluid-passing stations, the dimension of each fluid-passing opening is approximately 0,15 cm (0,060 inches) in width, a height substantially the same as the height of strips 30, 40, 50 and 60 or about 0,035 cm (0,014 inches) and a length of about 0,18 cm (0,070 inches) which is substantially the same as the width of the strips.

The length of the flow passage through each fluid-passing opening is substantially longer than the mean average between the width and height dimensions of the fluid passing opening. In effect, each fluid-passing opening is in itself a short pressure-drop channel. With reference to Figure 6, this pressure-drop phenomena may be explained as follows. Using flow channel 19 as exemplary, the flow from segment 19A of flow channel 19 comes directly toward the flow from segment 19B which is coming from the opposite direction, and they meet at the fluid-passing opening 56A. Each flow thus makes a 90° turn and flows straight for 0,18 cm (0,070 inches) through the length of fluid-passing opening 56A. The flows are then divided and each flow makes a 90° turn into flow-restricting segments 20A and 20B of flow channel 20. It is desirable to have the length of the fluid-passing opening (for example, 56A), which is also the thickness of wall 50, at least three times the thickness of the common wall 16 to get an increase in friction and pressure loss as the flow makes two sharp 90° turns in going through the fluid-passing openings from one flow-restricting passage to another. The same relationship exists for the lengths of the remaining fluid-passing openings 36, 46 and 66 relative to the thickness of common wall 16. Of particular significance is the provision of this 3-to-1 minimum ratio with regard to inlet stations 36 and outlet stations 66.

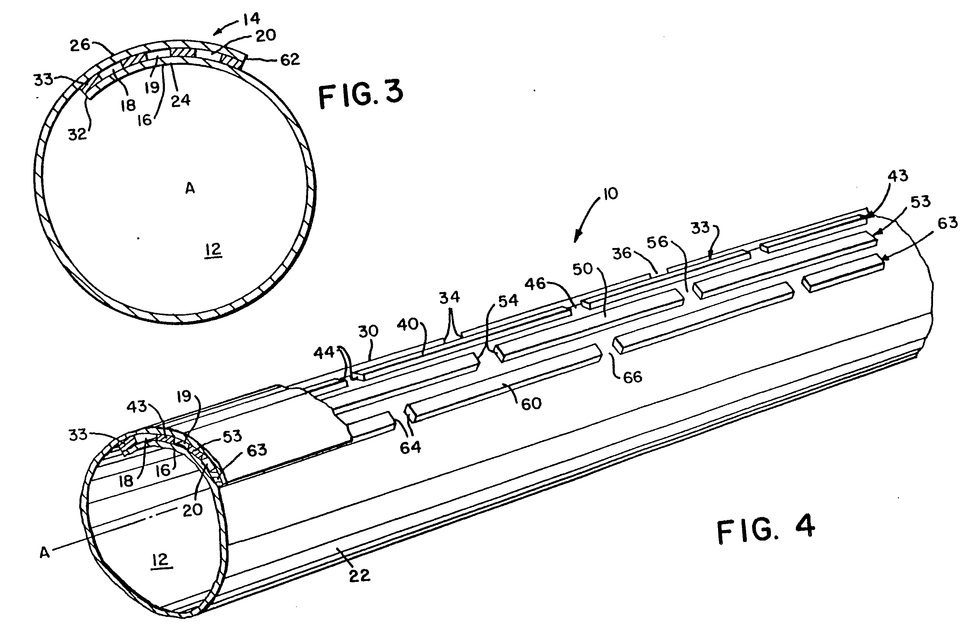

In the preferred embodiment of Figure 4, using a 152 μm (6 mil) polyethylene film, all fluid passages 18—20 have a generally rectangular configuration with a height of approximately 0,035 cm (0,014 inch) and a width of about 0,18 cm (0,070 inch). The fluid-passing openings 36 are spaced approximately 20 cm (eight inches) apart. The second fluid-passing openings 46 are spaced 20 cm (eight inches) apart with each opening 46 being located intermediate between, but spaced from, a pair of openings 36. The third fluid-passing openings 56 are spaced 20 cm (eight inches) apart with each opening 46 being located intermediate between. Finally, the outer openings 66 are spaced 20 cm (eight inches) apart with each opening 66 being located intermediate between, but spaced from a pair of openings 56.

In a preferred embodiment, as the main supply channel 12 of hose 10 is pressurized at 0,55 bar (8 psi), water flows through first inlet stations 36 located in wall member 33 which separates channel 12 and passage 18. The flow is then divided and moves within passage 18 to the nearest second inlet station 46 on either side of the first inlet station 36. Flow-restricting passage 18 has a length between inlet stations and a cross section of a size to reduce the pressure by approximately 0,07 bar (1,0 psi) within passage 18 between first fluid inlet stations 36 and second inlet stations 46.

Water then flows through the second fluid-passing openings or inlet stations 46 located in wall member 43 between passages 18 and 19 into passage 19 with an approximate 0,014 bar (0.2 psi) pressure loss. The flow is then divided and moves within passage 19 to the nearest third fluid-passing openings or inlet stations 56 on either side of each of the second fluid-passing openings 46. Flow-restricting passage 19 has a length between openings and an interior cross section of a size to reduce the pressure by approximately 0,1 bar (1.5 psi) within passage 19 between fluid-passing openings 46 and fluid-passing openings 56.

The water then flows through fluid-passing openings or inlet stations 56 located in wall member 53 between passages 19 and 20 with an approximate 0,035 bar (0.5 psi) pressure loss into passage 20. The flow is then divided and moves within passage 20 to the nearest discharge fluid-passing opening 66 on either side of fluid-passing opening 56. Flow-restricting passage 20 has a length between openings and an interior cross section of a size to reduce the pressure by approximately 0,32 bar (4.7 psi) within passage 20 between the third fluid-passing opening 56 and the discharge fluid-passing opening 66. The flow is then discharged to the exterior of the hose through discharge fluid passing openings or outlet stations 66 in wall member 63 with a slight pressure loss of about 0,007 bar (0.1 psi).

Because of the friction created as water passes through the small third fluid passage 20, the pressure adjacent to the discharge fluid-passing openings 66 is negligible (such as 0,007 bar (0.1 psi) or less), and the water actually drips out through the openings 66 under substantially quiescent conditions under almost no outward pressure.

The pressure drop loss between any inlet station and its nearest upstream outlet station depends on the width and height of the intermediate flow-restricting passage, the length of the same passage, and the rate of water passing through it.

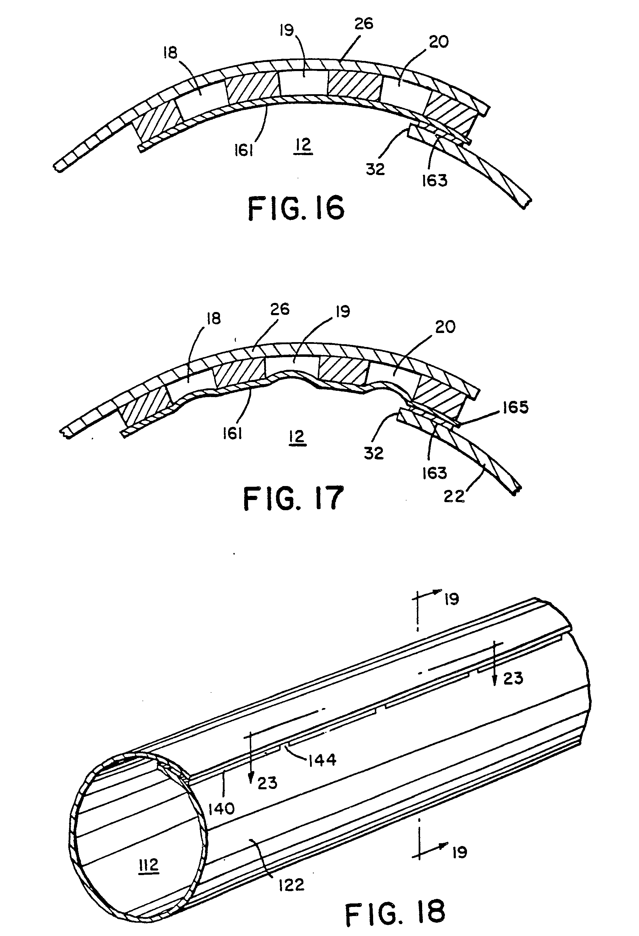

Figures 18—23 show yet another embodiment of a hose manufactured according to the present invention. The hose 110 basically comprises a gross water distributing channel 112 and a fine water flow-restricting passage 114. Adjacent to channel 112 and sharing a common wall 116 is the passage 114, disposed about the exterior of the main supply channel 112. The passage is substantially parallel to the longitudinal axis A of the main supply channel.

In use, the main supply channel 112 is connected to a source of pressurized water, and the hose 110 is arranged in much the same way as the hose 10 in Figure 1.

With reference to Figures 18 through 20, an elongated layer or sheet 122 of thin water-impervious plastic material, such as a thermoplastic film, terminates in two longitudinally extending margins 124 and 126 which overlap each other in a predetermined fashion. Interposed between the overlapping margins is a series of elongated longitudinally extending strips of varying lengths and arranged in a particular manner, yet to be described, to define the flow-restricting passage 114. The strips are also made from a water-impervious plastic material.

A first set of strips 130 is positioned near the edge 132 of margin 124, so that each of the strips defines an axis substantially parallel to and equidistant from the longitudinal axis A of the hose 110. The ends 134 of the strips are periodically spaced from each other to define inlet stations as a series of fluid-passing openings 136 therein. The frequency of the inlet stations typically ranges from a few inches to several feet throughout the full length of the hose. The inlet stations or first fluid-passage openings 136 are positioned so that they form a means of fluid communication between the main supply channel 112 and the flow-restricting passage 114. The spaces between the strips 130 define the first inlet stations 136, and the strips 130, in effect, define a common wall 133 between the main supply channel 112 and the passage 118.

In like manner, a second set of strips 140 is positioned near the edge 162 of the margin 126 so that the strips define an axis substantially parallel to the longitudinal axis A of the hose 110. The placement of the strips 140 is such that they are positioned near to, but spaced from, the wall 133 defined by strips 130. The ends 144 of the strips are spaced from each other to define a series of fluid discharge openings or outlet stations 146 to provide for fluid communication between the passage and the exterior of the hose. In the preferred embodiment, the spacing between the outlet stations 146 is substantially the same as that between the inlet stations 136.

In the preferred embodiment, the inlet and outlet stations 136 and 146 are substantially of a rectangular cross section and precisely formed by the positioning of the strips between the overlapping margins 124 and 126. The size of the outlets at each station is chosen so that there is a minimum chance of clogging as water passes through the station.

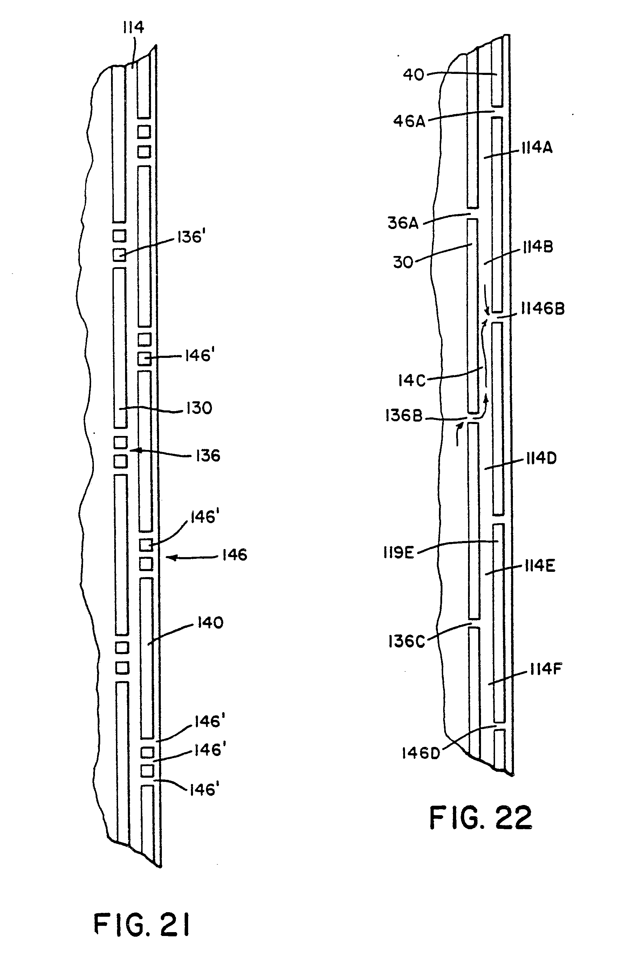

For the purposes of simplifying the presentation, the cross passageways or fluid-passing stations 136 and 146 in Figures 18—20 are shown in the context of a less preferred embodiment as a single opening. However, in a more preferred embodiment, such as that shown in Figure 21, three or more openings are used close together to comprise each station. By example, the three openings 146' constitute one fluid-passing station which minimizes the chance of clogging as the flow passes through the station. This provides multiple openings at each station so that, if one opening should clog, the other two openings can carry the flow through the station.

It is understood that a larger number of closely spaced fluid-passing openings may constitute the inlet and outlet stations 136 and 146 as long as the total cross-sectional area of the openings associated with each station exceeds a minimum size so that there is a minimum amount of clogging across the station.

In the preferred embodiment, having 8 inches (20 cm) between the centers of like fluid-passing stations, the dimension of each fluid-passing opening is approximately 0,15 cm (0,060 inches) in width, a height substantially the same as the height of strips 130 and 140 of about 0,025 cm (0,010 inches) and a length of about 0,18 cm (0,070 inches) which is substantially the same as the width of the strips.

The length of the flow passage through each fluid-passing opening is substantially longer than the mean average between the width and height dimensions of the fluid-passing opening. In effect, each fluid-passing opening is in itself a short pressure-drop channel. With reference to Figure 22, this pressure-drop phenomena may be explained as follows. The flow from segment 114B of flow channel 114 comes directly toward the flow from segment 114C which is coming from the opposite direction, and they meet at the fluid-passing outlet 146B. Each flow thus makes a 90° turn and flows straight for about 0,070 inches (0,18 cm) through the length of fluid passing opening 146B. It is desirable to have the length of the fluid-passing opening (for example, 146B), which is also the thickness of wall 140, at least three times the thickness of the common wall 116 to get an increase in friction and pressure loss as the flow makes the sharp 90° turn in going through the fluid-passing openings from the flow-restricting passage to the exterior of the hose. The same relationship exists for the remaining fluid-passing opening 136 relative to the thickness of common wall 116.

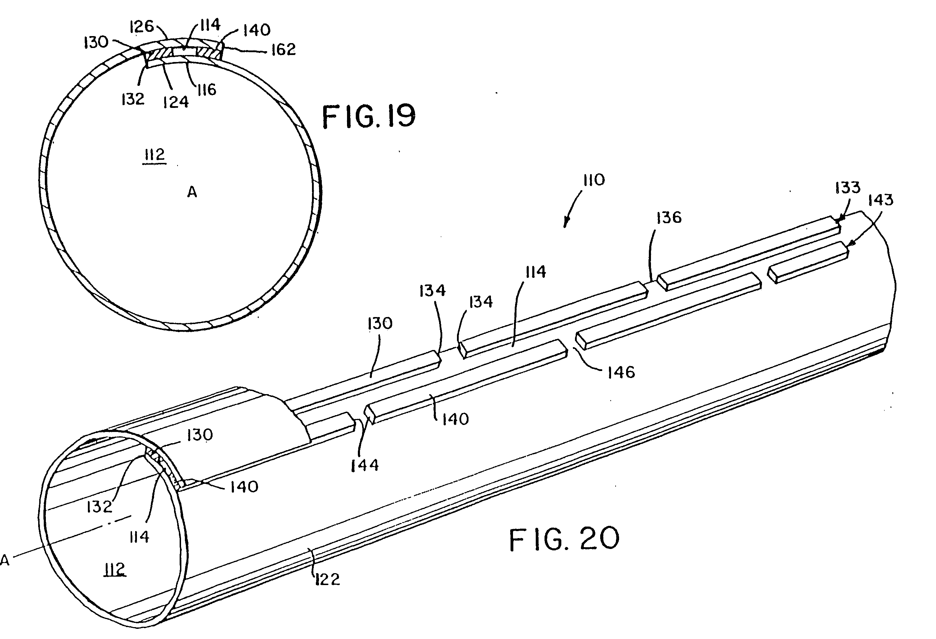

In the preferred embodiment of Figure 20, using 152 μm (6 mil.) polyethylene film, the passage 114 has a generally rectangular configuration with a height of approximately 0,025 cm (0,010 inch) and a width of about 0,18 cm (0,070 inch). The fluid-passing openings 136 are spaced approximately 20 cm (eight inches) apart, and the outer openings 146 are spaced 20 cm (eight inches) apart with each opening 146 being located intermediate between, but spaced from, a pair of openings 136.

As the main supply channel 112 of hose 110 is pressurized at 0,414 bar (6 psi), water flows through first inlet stations 136 located in wall member 133 which separates channel 112 and passage 114. The flow is then divided and moves within passage 114 to the nearest outlet station 146 on either side of the first inlet station 136. Flow-restricting passage 114 has a length between inlet stations and a cross section of a size to reduce the pressure by approximately 0,407 bar (5.9 psi) within passage 114 between fluid inlet stations 136 and outlet stations 146. The flow is then discharged to the exterior of the hose through discharge fluid-passing openings or outlet stations 146 in wall member 143 with a slight pressure loss of about 0,007 bar (0.1 psi).

Because of the friction created as water passes through the small fluid passage 114, the pressure adjacent to the discharge fluid-passing opening 146 is negligible (such as 0,007 bar (0.1 psi) or less), and the water actually drips out through the openings 146 under substantially quiescent conditions under almost no outward pressure.

In summary, and with reference to Figure 6, beginning with 0,55 bar (8 psi) in the main supply channel 12, there are substantially six steps of pressure reduction as follows: 1) There is approximately 0,07 bar (1.0 psi) pressure loss within each segment, for example, segment 18C, of flow-restricting channel 18; 2) There is a slight (approximately 0,014 bar (0.2 psi)) pressure loss across the second fluid-passing openings, for example, opening 46B; 3) There is a pressure loss of approximately 0,1 bar (1.5 psi) within each segment, for example, segment 19B, of the second flow-restricting channel 19; 4) There is another slight (approximately 0,035 bar (0.5 psi)) pressure loss across the third fluid-passing openings, for example, opening 56A; 5) There is a substantial (approximately 0,32 bar (4.7 psi)) pressure loss within each segment, for example, segment 20A, of the third flow-restricting channel 20; 6) Lastly, there is a very slight (approximately 0,007 bar (0.1 psi)) pressure loss across the discharge fluid-passing openings, for example, opening 66B. Because the pressure loss across each discharge fluid-passing opening is on the order of 0,007 bar (0.1 psi), insect attacks to the discharge openings will have relatively little effect on the overall operation of the hose.

The flow characteristic for a hose of the preferred embodiment that has discharge outlets spaced at 20 cm (8 inches) and a total discharge rate of 7,4 l/min per 100 m (0,5 g/min per 100 feet) can be described as approximately 0,00333 g/min (0,015 l/min) passing through each fluid passing opening 36, 46, 56, and 66 and approximately 0,001666 g/min (0,0076 l/min) passing through each flow-restricting passage segment, such as those represented by 18A, 19A, and 20A.

The hose functions well in the frequently found uneven field conditions where there are sharp variations in the soil elevation such as a mound. There is substantially no flow from one segment of the flow-restricting passage to another segment within the same flow-restricting passage. Referring to Figure 6, a portion of the water from inlet opening 36B flows into segment 18C where it continues to flow toward inlet opening 46B until it meets the flow of segment 18B which is coming from the opposite direction. The flows from segments 18B and 18C coming from opposite directions come together at inlet opening 46B where they both flow through opening 46B into the flow-restricting passage 19. Since the flows of each segment in all the fluid-restricting passages flow alternately in opposite directions, there is substantially no flow from one segment to another in any of the flow-restricting passages 18—20 even if the hose 10 is on a sharp incline as much as 45°. Water supplied to a particular outlet opening 66 comes from inlet openings 36A, 36B, 36C and 36D all of which are within 12 inches of the outlet opening 66. Since there is substantially no longitudinal flow between segments in the flow restricting passages, and the outlet openings are essentially opposite their inlet openings, the flow rate out of a particular outlet opening 66 is affected by the pressure in the main supply channel at a point closest to the outlet opening 66. The hose of the preferred embodiment, with 0,55 bar (8 psi) in the main supply channel, placed in a field over a mound of soil 50 cm (20 inches) high still has a relatively uniform distribution pattern with only about a 10% decrease in flow on top of the mound as compared to the surrounding soil level.

The flow rate of the preferred embodiment is generally linear with the pressure in the main supply channel, so that the flow from an outlet opening at any given point along the hose is increased or decreased at substantially the same rate that corresponds to a pressure increase or decrease at that same point within the main supply channel.

An important aspect of the present invention is a self-cleaning feature within the third flow-restricting passage 20. Most of the total pressure reduction takes place within the segments of the third flow-restricting passage 20. It has been observed that in the preferred embodiment more than 58% of the total pressure loss takes place within the segments (for example, segments 20A and 20B) of the third flow-restricting passage even though they have substantially the same length and cross-sectional dimensions as the first flow-restricting passage 18 in which approximately 12% of the total pressure loss takes place and also have substantially the same dimensions as the second flow-restricting passage 19 in which approximately 19% of the pressure loss takes place.

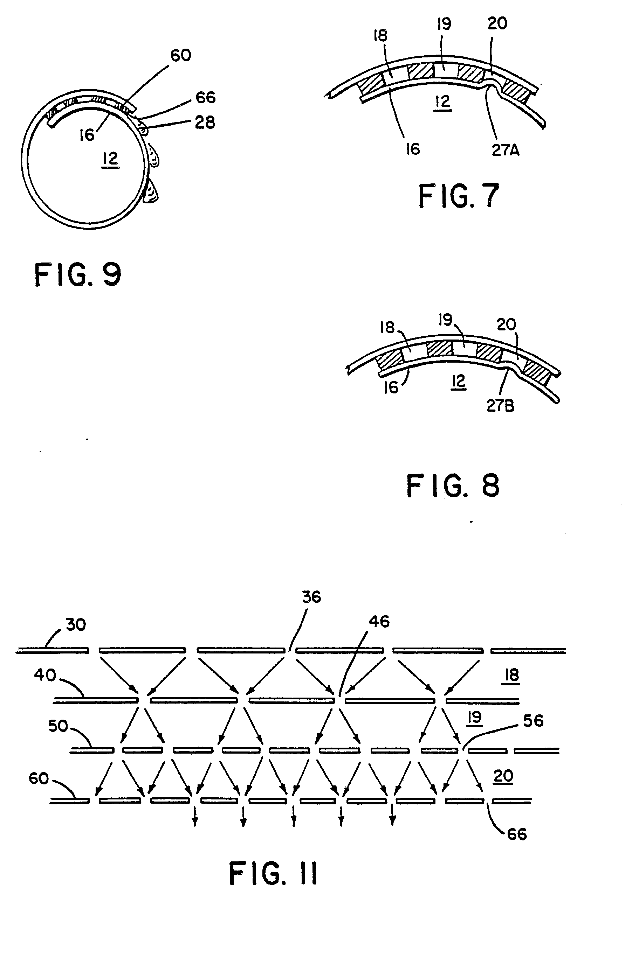

Figure 3 illustrates the cross-sectional view of the flow restricting passages 18, 19, and 20 in their normal configuration or as pressurized at a low pressure. Figure 7 is a cross-sectional view of the flow-restricting passages 18—20 at a point next to a fluid-passing opening 56. Figure 8 is a cross-sectional view of the flow-restricting passages 18—20 at a point next to the discharge fluid-passing openings 66. In Figure 3, the common wall 16 is in its normal relaxed state, such as when there is no pressure or low pressure (1 psi) (0,069 bar) in the main supply channel 12. The flow-restricting passage 20 is open and relatively free flowing so that any minute impurities in the water will flush on through. However, when the working pressure of 8 psi (0,55 bar) is applied to the main channel there is approximately a 3.2 psi. (0,22 bar) pressure differential across the common wall 16 at point 27A as shown in Figure 7 causing the flow-restricting passage 20 to be smaller due to outward deflection of the common wall 16 at point 27A. At the same time, Figure 8 shows a greater outward deflection of common wall 16 at point 27B due to the approximately 7.9 psi (0,54 bar) pressure differential across common wall 16. The cross-sectional view of Figure 7 is at the inlet fluid passing opening 56A (Figure 6) of the flow-restricting passage segment 20A, and Figure 8 is at the discharge fluid-passing opening 66B of the flow-restricting passage segment 20B. The amount of deflections of the common wall 16 into the flow-restricting passage segment 20B gradually increases from the indentation at 27A in Figure 7 to a substantial indentation at 27B in Figure 8. When under working pressure, the cross-sectional area of the flow-restricting passage segment 20B is substantially smaller than segments 18A and 19A. This smaller cross-sectional dimension provides the necessary pressure loss within segment 20B to give the desired flow. Yet segment 20B returns to its normal cross-sectional dimensions (Figure 3) when the pressure is reduced at the end of the watering cycle. The segment 20B is self-flushing when it is in its normal configuration at a low pressure at both the beginning and end of the watering cycles. Any minute particles that may have accumulated during the watering cycle, due to the reduced size of segment 20B, are flushed at this time.

As shown in Figure 4, the main supply channel 12, formed by wall member 22, becomes circular when pressurized, forming a round tube essentially free of internal partitions or other obstructions that would provide additional surfaces in the flow channel causing more loss of pressure due to friction, as well as making the hose more difficult to collapse for storage and shipment.

As the hose is installed in the field, it is preferable to orient the hose so that the flow-restricting passages are on top. Foreign particles in the water normally settle to the bottom of the main supply channel and are less apt to enter the fluid-passing openings and flow passages when they are on top of the hose.

Three elements are combined to cause the flow from the discharge fluid passing openings 66 to tend to fall directly below each opening 66 as shown in Figure 9. First, the discharge fluid passing openings 66 are located in an upper quadrant of the hose rather than in the middle and on top of the hose. Second, the flow from discharge openings 66 tends to come out approximately normal to the last set of strips 60 and pointed in a slightly downward angle when the hose is pressurized and in its normal upright position. Third, the common wall 16 forms one portion of the perimeter of each discharge fluid passing opening 66 so that the flow is in direct contact with the outer wall 28 as it passes through the discharge fluid passing openings and tends to cling to the surface of the outer wall 28 until it drops on the soil directly below each discharge fluid passing opening 66.

Referring to Figure 6, each fluid discharge opening, for example, 66B is supplied with the total flow from two segments 20B and 20C of the third flow restricting passage 20; by one-half the flow from each of four segments 19A, 19B, 19C, 19D of the second flow-restricting passage 19 and by one-third of the flows from each of six segments 18A, 18B, 18C, 18D, 18E, 18F of the first flow-restricting passage 18. Thus, it can be seen that, if, for example, segments 18C, 19B, and 20B should become clogged due to a very poor water quality, the remaining segments would still supply the discharge fluid passing opening 66B so that a flow would be maintained to the plants even though the flow would be less than the adjoining outlets.

Thus, it can be seen that the total accumulated length of segments 18C, 19C, and 20C of the flow-restricting passages should be of substantially greater length than the distance between two adjacent discharge fluid-passing openings 66 and, at the same time, the flow-restricting channels should be continuous so that each discharge fluid-passing opening is supplied by more than one flow-restricting channel segment and more than one inlet fluid-passing opening. By using a long total length of flow-restricting channels, it is possible at the same time to use a larger cross section in the flow-restricting channels and still maintain the same flow rate. The larger cross sections in the flow-restricting channels provide a flow path that is less apt to clog from impurities in the water.

In a similar manner, the flow for each discharge fluid-passing opening, for example, 66B, is supplied by 50% of the flow from each of the third inlet fluid passages 56A and 56B; by 25% of the flow through each of the second inlet fluid-passing openings 46A and 46C and 50% of second inlet fluid-passing opening 46B; and by 25% of the flow through each of four inlet fluid passing openings 36A, 36B, 36C and 36D (not shown). Again, it can be seen that if, for example, fluid-passing openings 36A, 46A or 56A should become clogged, the remaining inlet fluid-passing openings 36B 36C, 36D, second fluid-passing openings 46B, 46C and third fluid-passing opening 56B would supply the discharge fluid passing opening 66.

While an 0,55 bar (8 psi) inlet water pressure is used to illustrate operation of a preferred embodiment, embodiments incorporating the teachings of the present invention will operate at inlet water pressures ranging from about 0,14 bar (2 psi) to 3,5 bar or more (50 or more psi), depending on the strength of wall 22, fluid-passing opening sizes, ratios, etc.

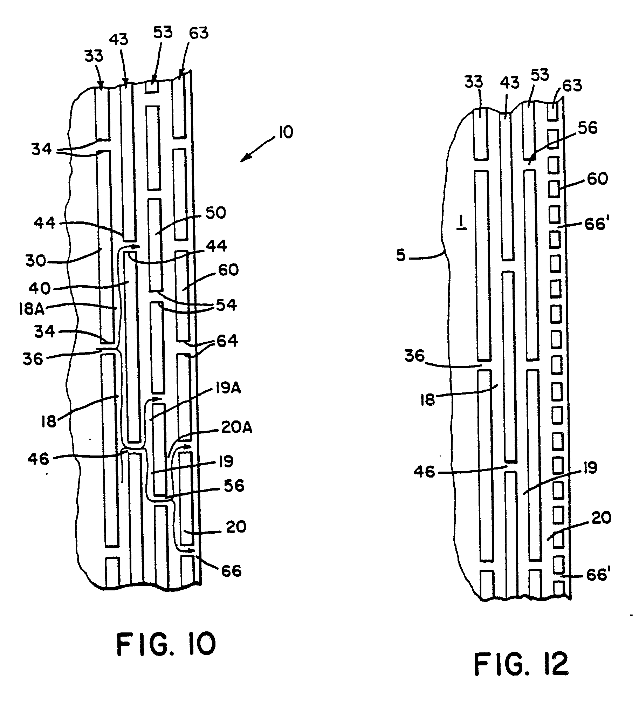

Figure 10 shows yet another embodiment for a hose embodying the teachings of the subject invention. In this arrangement, the distances between adjacent inlet stations defined in both strips 50 and 60 have been reduced so that the distance between adjacent inlet stations 56 is 10 cm (four inches) and the distance between adjacent outlet stations 66 is likewise 10 cm (four inches). The distances between adjacent inlet stations 36 and 46 remain unchanged at 20 cm (eight inches).

The flow path of this type of configuration may be explained with reference to Figures 10 and 11, where it can be seen that there are twice as many openings 56 and 66 as there are openings 46 and 36. If we assume the flow rate for a given hose with outlets spaced 10 cm (4 inches) apart is 8,9 l/min per 100 m (0,6 g/min per 100 foot) length, the theoretical flow through each opening 56 and 66 is 0,002 g/min (0,009 l/min) and the flow through each opening 36 and 46 is 0,004 g/min (0,018 l/min). The flow through segment 20A is 0,001 g/min (0,004 l/min), while the flow through segments 18A and 19A is 0,00 g/min (0,009 l/min). The length of segments 20A and 19A is 5 cm (2 inches), while the length of segment 18A is 10 cm (4 inches). If the configurations were used as shown in Figure 6 but with a 10 cm (4-inch) outlet spacing, all of segments 18C, 19B and 20A would be 5 cm (2 inches), with the total combined length of the flow passage segments through which the water has to travel between the inlet openings 36 and the discharge openings 66 being 15 cm (6 inches). However, with the embodiment illustrated in Figures 10 and 11, the total length of the flow passage segments 18A, 19A and 20A through which the water has to travel between the inlet openings 36 and the outlet openings 66 is 20 cm (8 inches). This longer total combined length flow passage produces a greater pressure loss due to friction. In addition, the flow rates in flow-restricting segments 18A and 19A of Figure 10 are twice the flow rate that they would have been in the configuration shown in Figure 6. These higher flow rates in flow-restricting segments 18A and 19A of Figure 10 produce a still greater pressure loss. This additional pressure loss reduces the flow rate through the discharge openings 66 so that it is possible to have closer outlet spacing, such as 10 cm (4 inches), without greatly increasing the total flow rate from the hose.

Another example of reducing flow rate for a given outlet spacing would be using a 60 cm (24-inch) spacing for inlet openings 36 and 46 and a 30 cm (12 inch) spacing for inlet openings 56 and outlet openings 66.

Figure 12 shows yet another embodiment where like reference numerals denote like elements, and only the differences will be described. The arrangement of Figure 12 is similar to that of the first preferred embodiment with the exception that the strip 60 is arranged to include a plurality of closely spaced outlet stations 66' such as 0,64 cm (1/4 inch) to 2,54 cm (1 inch) apart. This type of arrangement can be advantageously used to irrigate plants growing in a media of extremely porous nature.

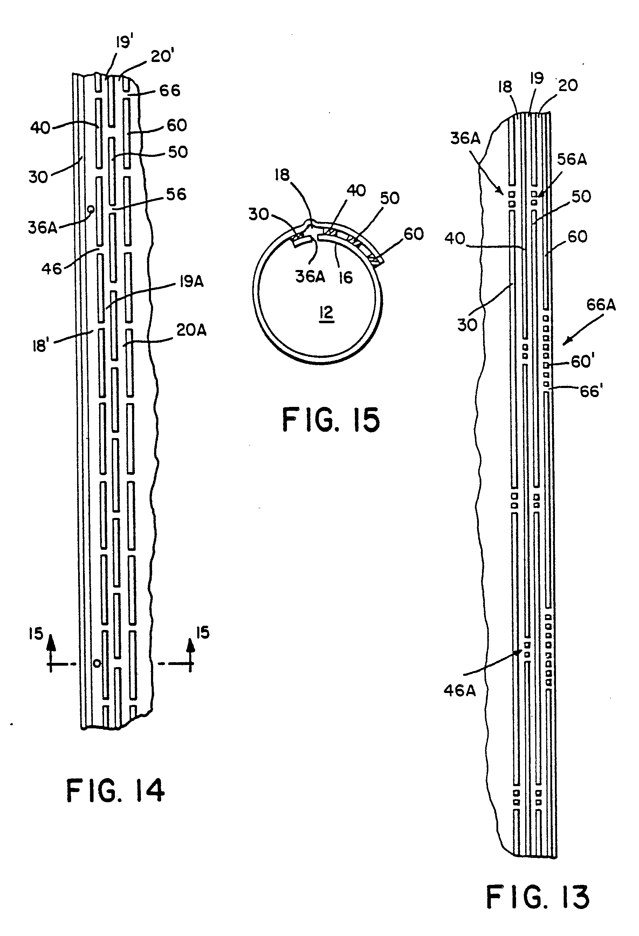

As can be appreciated from the foregoing discussion, there are any number of arrangements of inlet and outlet station patterns, as well as dimensional arrangements for flow-restricting passages, according to the requirements for the area to be irrigated. For example Figure 13 shows an arrangement where the inlet stations are each defined by three closely spaced openings 36A, and each outlet station is defined by numerous closely spaced openings 66A. Further, each of the outlet stations is spaced apart at predetermined distances.

It is often desirable to irrigate flower pots at several intervals across the top of the pot so that the entire root area is watered uniformly. The embodiment of Figure 13 provides an ideal way to irrigate a row of 15 cm (6 inch) flower pots spaced on 30 cm (12-inch) centers. The hose is stretched lengthwise over the top of pots so that there are several outlets to drip on each pot. A hose for such an application has inlet stations 36A, 46A, and 56A spaced at 30 cm (12-inch) intervals and outlet stations 66 spaced at 30 cm (12-inch) centers each consisting of 10 or 12 outlet openings spaced about 0,64 cm (1/4 inch) apart. This provides a row of drops about 6,4 to 7,6 cm (2-1/2 to 3 inches) in length in the center of each pot.

A similar application for this embodiment is a row of trees spaced 6 m (20 feet) apart. A hose is run lengthwise of the row and next to the trees and centered on each tree are 12 outlet openings 66 spaced 30 cm (12 inches) apart with no openings between so that the irrigation is concentrated only on the area of the tree roots.

Of course, it is to be understood that the various inlet and outlet station configurations may be produced by the method described hereinbefore by simply arranging the appropriate arrangement of teeth. Thus, it can be seen that, by simply changing the molding wheel, a new pattern may be introduced into the hose without any further change of the production equipment.

Figures 14 and 15 show yet another embodiment for a hose produced according to the teachings of the subject invention. This embodiment combines the hydraulic principle of pressure loss due to water flowing through an orifice and pressure loss due to water flowing through a flow restricting channel, wherein the flow rate through the orifice changes at approximately a ratio of the square root of the change in pressure while the flow rate through the flow-restricting channel changes approximately linearly with the pressure change. This combination gives a flow rate from the outlets 66 that changes in response to pressure change at a rate somewhere between linear and the square root of pressure change depending on the structural dimensions of the inlet openings and the length and cross-sectional area of the flow-restricting channels. This embodiment is similar to that shown in Figure 4 with the exception that bead 30 is of unitary construction with no indentations being provided. Instead, inlet orifices 36A are provided within the film to create the fluid communication path between the main supply channel 12 and the flow-distributing channel 18'. In addition, the flow-distributing channel 18' has a cross-sectional area which is large enough to allow the flow from each inlet orifice 36A to move through the flow-distributing channel 18' to the fluid-passing orifices 36A in the immediate vicinity without substantial pressure loss. At the same time, the flow-distributing channel 18' has a cross-sectional area small enough so that a major portion of the flow from each inlet orifice 36A will tend to flow out of the fluid-passing openings 46 in the immediate vicinity of the inlet orifice 36A. This vicinity will normally consist of a length half way to adjacent inlet orifices 36A. In a typical embodiment, the inlet openings 36A are approximately 0,06 cm (0,024 inches) in diameter and spaced about 122 cm (48 inches) apart. The two flow-restricting passages 19' and 20' are approximately 0,035 cm (0,014 inch) high and 0,18 cm (0,070 inch) wide, and the first, second and third fluid-passing openings 46, 56 and 66 are on 20 cm (8-inch) centers. With an 0,55 bar (8 psi) pressure in the main supply channel 12, a typical pressure loss across the inlet openings would be approximately 0,2 bar (3 psi), and a pressure loss within the first flow-restricting passage 19' would be approximately 0,24 bar (3.5 psi) with approximately a 0,1 bar (1.5 psi) pressure loss within the flow-restricting passage 20'.

Since the flow rate from the outlets changes substantially less than the pressure changes within the main supply channel, it is possible to use longer rows with the same uniformity than would be possible when using a hose where the outlet flow is linear with pressure.

The hydraulic flow characteristic for the embodiment of Figures 14 and 15 could be described as a hose with 8 psi in the main supply channel with inlet orifices 36A spaced 122 cm (48 inches) apart and of such a size that each will pass 0,02 g/min (0,09 l/min) at a pressure loss of 0,2 bar (3 psi), whereupon this 0,02 g/min (0,09 l/min) flow is divided for passage through 6 first fluid-passing openings 46, spaced on 20 cm (8-inch) centers, and then is further divided for passage into 12 flow-restricting passage segments 19A, each approximately 10 cm (4 inches) in length and of a cross-sectional size so that each segment will carry 0,0016 g/min (0,007 l/min) at a pressure loss of 0,1 bar (1.5 psi).

Whereupon there is approximately 0,035 bar (0.5 psi) pressure loss as the flow passes through the fluid-passing openings 56 into 12 second fluid-restricting passage segments 20A, each approximately 10 cm (4 inches) in length and of a cross-sectional size so that each segment will carry 0,001666 g/min (0,007 l/min) at a pressure loss of approximately 0,2 bar (2.9 psi) so that the pressure within the flow-restricting passages 20 adjacent to the outlet openings 66 is approximately 0,007 bar (0,1 psi) whereupon the flow passes through the 8 spaced outlet openings 66 in the form of a slow drip. The total flow from the 150 outlets (or 30 m (100 feet) of hose) would be 0,5 g/min (2,27 l/min) with a total pressure reduction of 0,545 bar (7.9 psi) between main supply channel 12 and a point which is adjacent to the outlet openings and in the flow-restricting passage 20.

This embodiment is configured so the flow rate out of the outlet openings 66 can be designed to suit the crop by changing the spacing and diameter of the inlet orifices 36A and/or the cross-sectional dimensions and length of the flow-restricting passages 19' and 20'. Also, the hose can be made to function so that a major percent of the pressure drop takes place either across the inlet orifice or within the flow-restricting passages.

Figures 16 and 17 illustrate yet another embodiment of the hose 10. As shown in Figures 16 and 17, the flow-restricting channels 18, 19 and 20 are defined in part by an elongated flat film 161 which is of reduced thickness. This film replaces the margin area 24 in the embodiment of Figure 4. For this reason, the edge 32 of sheet 22 is secured to the margin 165 of the sheet 161 by a conventional hot melt bead 163. The reduced thickness of the common wall 161 allows each of the flow-restricting passageways 18, 19 and 20 to be reduced in size and thereby create a greater friction when the main channel 12 experiences an increase in water pressure. The reduction in cross-sectional area under the increase in water pressure is illustrated in Figure 17.

This embodiment gives a uniform flow from a longer length of row. At the inlet end of the hose, the higher pressure (0,83 bar=12 psi, for example) within the main channel 12 causes the thinner portion of common wall 161 to stretch and deflect outwardly as in Figure 17 and into the flow-restricting passages 18, 19 and 20, while at the same time the exterior common wall 26 portion of the flow restricting passages holds its normal dimensions because it is a heavier wall that does not stretch substantially. An alternative to using a thinner wall for the sheet 161 is to use a material of the same thickness but with a greater ability to stretch under pressure than the material used for common exterior wall 26.

This reduces the size of the flow-restricting passageways and consequently reduces the flow through said passageways. As the flow travels through the main channel 12 in very long lengths of hose, the pressure within is gradually reduced due to friction so that the closed off end of the main channel 12 has substantially less pressure (0,415 bar=6 psi, for example) than the inlet end. The thin common wall 161 at the closed off end of the hose has less pressure against it and maintains its normal circular configuration (Figure 16) allowing the flow-restricting passageways to hold their normal cross-sectional area and flow. Therefore, the flow at the inlet end and the closed off end can be substantially the same even though there is about a 50% loss in pressure due to friction within the main channel 12. It is understood that the thin section 161 may be a thinner portion of sheet 22 rather than a separate sheet. The net effect is that the size of the flow-restricting passages are pressure compensating to give a relatively uniform flow throughout the length of the hose. Hoses which have the pressure compensating flow-restricting passages are suited to fields in which the rows run up or downhill, since the flows from the outlets remain relatively even though the pressures within main flow channel later with changes in elevation.

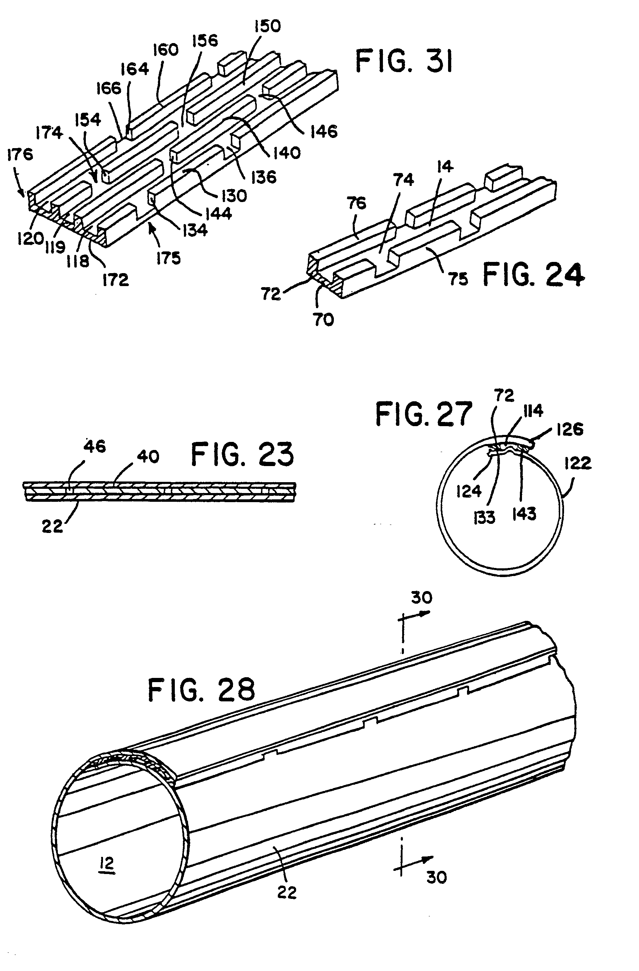

Figures 24—27 show a modification to be made to the hose of Figure 2 to provide another embodiment manufactured according to the teachings of the subject invention.

With references to Figures 24 through 27, the elongated layer or sheet 122 of thin water-impervious plastic material, such as a thermoplastic film, terminates in two longitudinally extending margins 124 and 126 which overlap each other in a predetermined fashion. Interposed between the overlapping margins is an elongated flat sheet 70 with elongated longitudinally extending ridges or strips of varying lengths arranged in a particular manner, yet to be described, to define the fine water-distributing passage 114. The flat sheet with ridges is also made from a water-impervious plastic material.

With continued reference to Figures 24—27 and as oriented in Figure 24, the elongated sheet 70 includes a planar bottom surface 72 and a planar upper surface 74. The sheet also defines right and left longitudinal edges 75 and 76, respectively. Defined on the upper surface 74 are the series of ridges which, together with the upper surface, define three sides of flow-restricting channel 114.

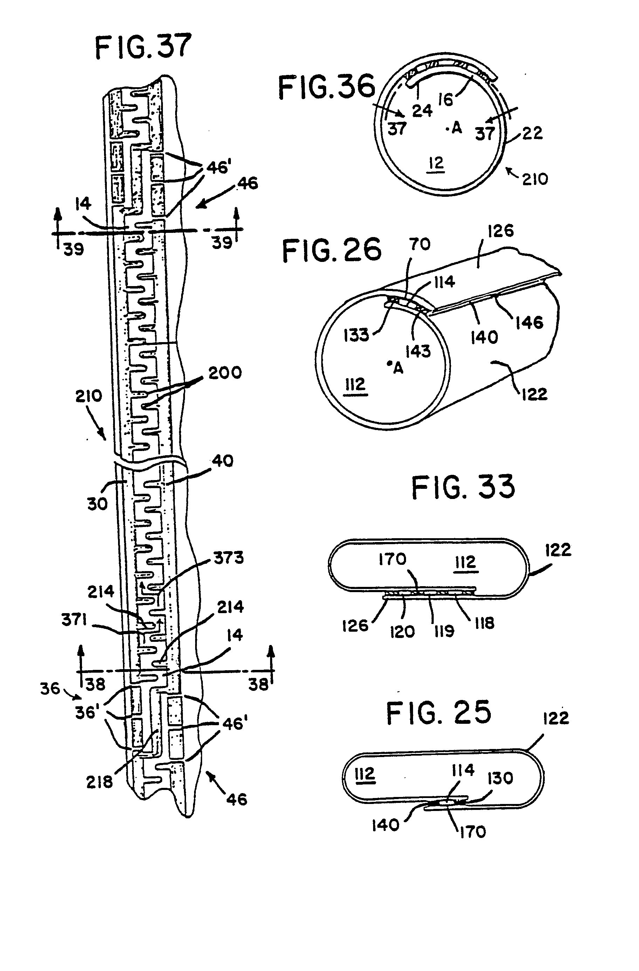

As shown in Figure 26, the bottom surface 72 of the sheet 70 is in intimate contact with and secured to the margin 126 of sheet 122. At the same time, each of the ridges is in intimate contact with and secured to the margin 124, thus completing the flow-restricting channel structure.

In all other respects the modification of Figures 24—27 is substantially the same as the embodiment of Figures 18—20.

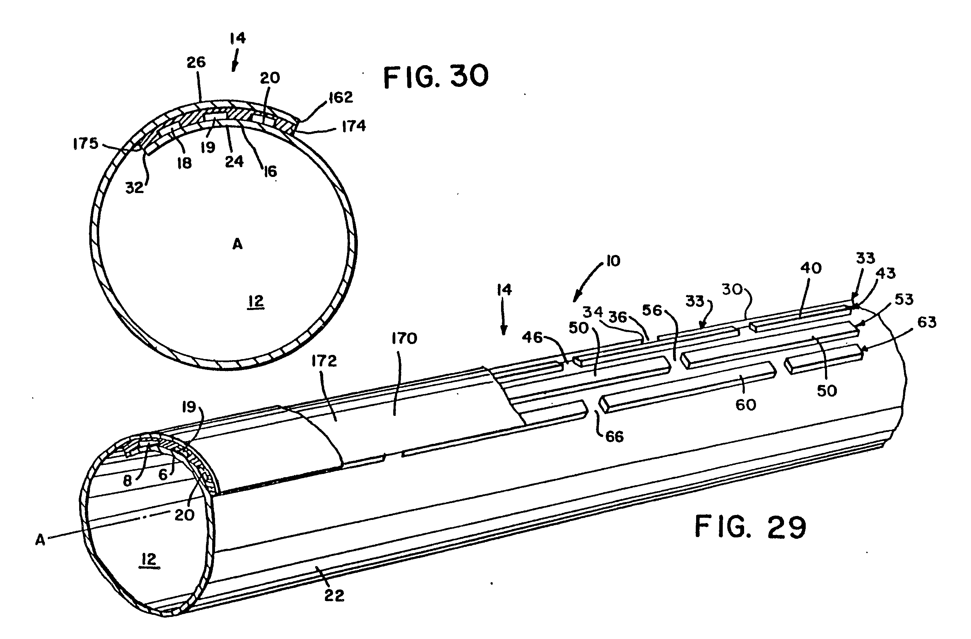

Figure 27 illustrates a flow-regulating feature which may be incorporated in a hose manufactured in accordance with this invention. The outer wall of flow channel 114 is made up of the outer wall margin 126 with the addition of the flat sheet 70 making its total thickness greater and stronger than the portion of flow channel 114 defined by the common wall 116. A pressure differential across the thinner common wall 116 causes wall 116 to deflect outwardly into the flow channel 114 while the outer wall margin 126 and sheet 70 remain in their normal configuration due to the extra thickness they create. This reduces the size of the flow channel 114 in response to pressure and provides uniform watering over the length of the hose even though there might be considerable differences in pressure in the main supply channel 112 due to friction losses or changes in elevation. The major pressure differential is found in about the last third of channel 114 as measured between an inlet station 136 and its associated outlet station 146.

Figures 28—31 show another embodiment of a hose manufactured according to the teachings of the present invention. Because the hose is similar to that shown in Figures 1—4, like numbers are used to show like elements, and only the differences will be described.

In use, the main supply channel 12 is connected to a source of pressurized water in much the same way as the first embodiment with reference being made to Figure 1. Interposed between the overlapping margins 24 and 26 is an elongated flat sheet 170 with elongated longitudinally extending ridges or strips of varying lengths arranged in a particular manner, yet to be described, to define the fine water-distributing network 14. The flat sheet with ridges is also made from a water-impervious plastic material.

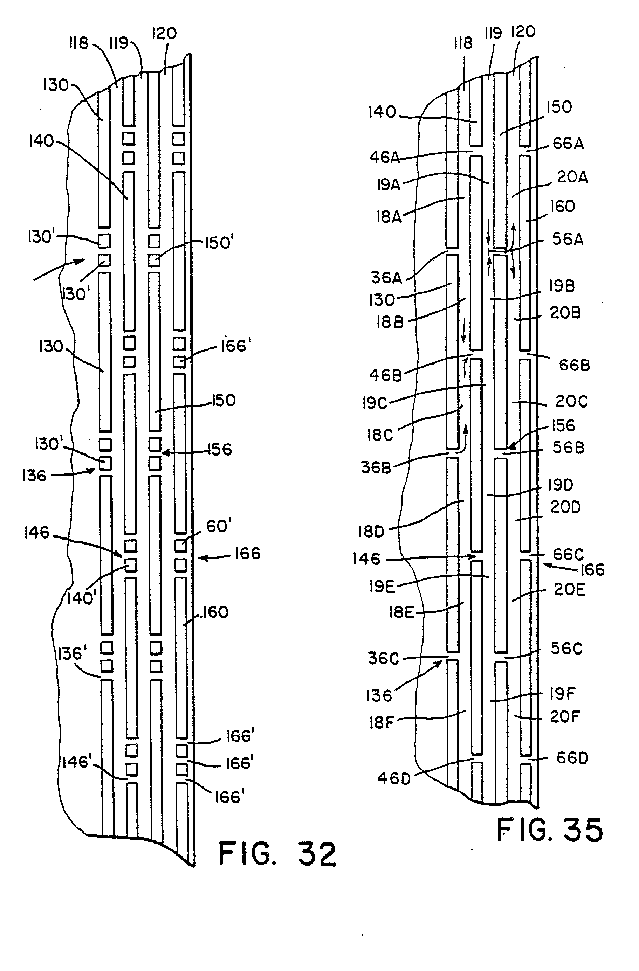

With reference to Figures 28—31, and as oriented in Figure 31, the elongated sheet 170 includes a planar bottom surface 172 and a planar upper surface 174. The sheet also defines right and left longitudinal edges 175 and 176, respectively. Defined on the upper surface 174 are the series of ridges which, together with the upper surface, define three sides of each flow-restricting channel 18, 19 and 20. As shown in Figure 29, the bottom surface 172 of the sheet 170 is in intimate contact with and secured to the margin 26 of sheet 22. At the same time, each of the ridges is in intimate contact with and secured to the margin 24, thus completing the flow-restricting channel structure.

Again with reference to Figures 28—31, the particulars of the fine water-distributing network 14 and the arrangement of ridges in a preferred embodiment will now be described. With the exception of the structure associated with the flat sheet 170 with ridges, the hose of Figures 28—31 is the same as the hose of Figures 1—4. In this regard, the strips 30 define the edge 175 of the sheet 170. The second set of strips 140, which like all of the strips are an integral part of the sheet 170, also have their ends 44 spaced from each other to define a further set of fluid-passing openings or inlet stations 46, to form a means of fluid communication between the first passage 18 and the second flow-restricting passage 19. Finally, the strips 60 define the edge 174 of sheet 170.

For the purposes of simplifying the presentation, the fluid-passing stations 36, 46, 56 and 66 in Figures 28—31 are shown in the context of a less preferred embodiment as a single opening. However, in a more preferred embodiment, such as that shown in Figure 32, three or more openings are used close together to comprise each inlet and outlet station. By example, the three openings 166' constitute one fluid-passing station which minimizes the chance of clogging as the flow passes through the station. This provides multiple openings at each station so that, if one opening should clog, the other two openings can carry the flow through the station.

In the preferred embodiment having 8 inches (20 cm) between the centers of like fluid-passing stations, the dimension of each fluid-passing opening is approximately .060 inches (0,15 cm) in width, a height substantially the same as the height of strips 30, 40, 50 and 60 or about 0,035 cm (0,014 inches) and a length of about 0,18 cm (0,070 inches) which is substantially the same as the width of the strips.

In the preferred embodiment of Figure 29, using a 152 μm (6 mil.) polyethelene film, all fluid passages 18—20 have a generally rectangular configuration with a height of approximately 0,035 cm (0,014 inch) and a width of about 0,18 cm (0,070 inch).

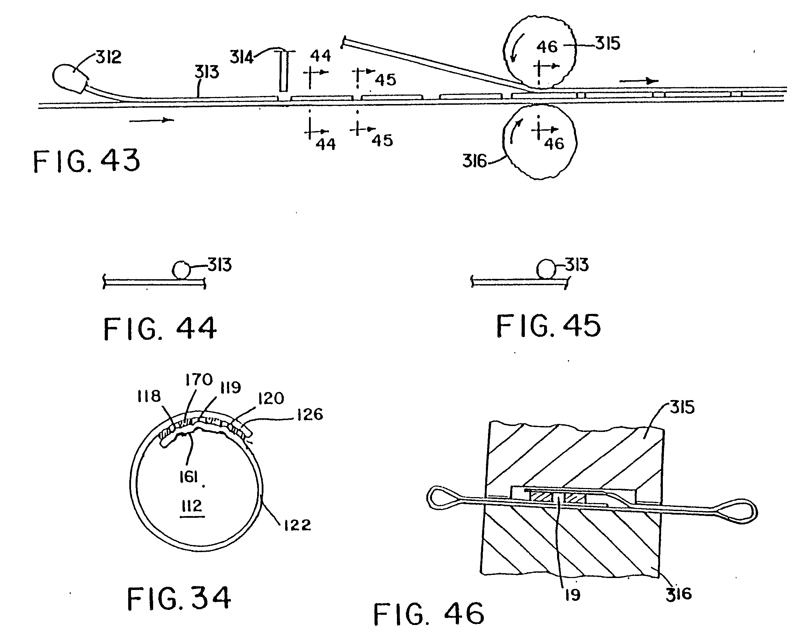

As shown in Figures 28—31, the flow-restricting channels 18, 19 and 20 are defined in part by an elongated flat sheet 170 which, together with margin 26, is of greater thickness than the common wall 61. The lower thickness of the common wall 61 allows each of the flow-restricting passageways 18, 19 and 20 to be reduced in size and thereby create a greater friction when the main channel 12 experiences an increase in water pressure. The reduction in cross-sectional area under the increase in water pressure is illustrated in Figure 33.

This embodiment gives a uniform flow from a longer length of row. At the inlet end of the hose, the higher pressure (0,83 bar=12 psi, for example) within the main channel 12 causes the thinner portion of common wall 61 to stretch and deflect outwardly as in Figure 34 and into the flow-restricting passages 18, 19 and 20, while at the same time the exterior common wall 26 along with the portion of sheet 170 that defines the flow restricting passages holds their normal dimensions because they, together, provide a heavier wall that does not stretch substantially.

This reduces the size of the flow-restricting passageways and consequently reduces the flow through the passageways. As the flow travels through the main channel 112 in very long lengths of hose, the pressure within is gradually reduced due to friction so that the closed off end of the main channel 12 has substantially less pressure (0,415 bar=6 psi, for example) than the inlet end. The thin common wall 161 at the closed off end of the hose has less pressure against it and maintains its normal circular configuration (Figure 30) allowing the flow restricting passageways to hold their normal cross-sectional area and flow. Therefore, the flow at the inlet end and the closed off end can be substantially the same even though there is about a 50% loss in pressure due to friction within the main channel 12. The net effect is that the size of the flow-restricting passages are pressure compensating to give a relatively uniform flow throughout the length of the hose. Hoses which have the pressure compensating flow-restricting passages are suited to fields in which the rows run up or downhill, since the flows from the outlets remain relatively even though the pressures within the main flow channel change due to changes in elevation.

In this way, the flow rate of the preferred embodiment is pressure compensated so that the flow from an outlet opening at any given point along the hose remains relatively constant despite any pressure increase or decrease within the main supply channel.

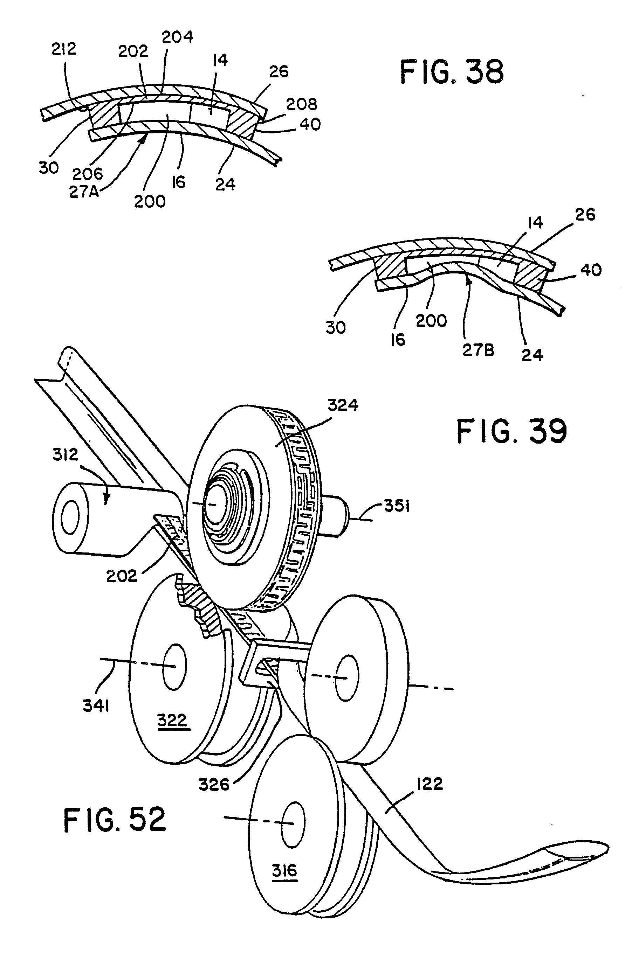

Referring to Figure 35, the way in which fluid passes through the water distributing network will now be described. Each fluid-discharge opening, for example, 66B is supplied with the total flow from two segments 20B and 20C of the third flow restricting passage 120; by one-half the flow from each of four segments 19A, 19B, 19C, 19D of the second flow-restricting passage 119 and by one-third of the flows from each of six segments 18A, 18B, 18C, 18D, 18E, 18F of the first flow-restricting passage 18. Thus, it can be seen that if, for example, segments 18C, 19B, and 20B should become clogged due to a very poor water quality, the remaining segments would still supply the discharge fluid-passing opening 66B, so that a flow would be maintained to the plants even though the flow would be less than the adjoining outlets.

Thus, it can be seen that the total accumulated length of segments 18C, 19C and 20C of the flow-restricting passages should be of substantially greater length than the distance between two adjacent discharge fluid-passing openings 66 and, at the same time, the flow-restricting channels should be continuous so that each discharge fluid-passing opening is supplied by more than one flow-restricting channel segment and more than one inlet fluid-passing opening. By using a long total length of flow-restricting channels, it is possible at the same time to use a larger cross section in the flow-restricting channels and still maintain the same flow rate. The larger cross sections in the flow restricting channels provide a flow path that is less apt to clog from impurities in the water.

In a similar manner, the flow for each discharge fluid-passing opening 66 is supplied by 50% of the flow from each of the third inlet fluid passages 56A and 56B; by 25% of the flow through each of the second inlet fluid-passing openings 46A and 46C and 50% of second inlet fluid passing opening 46B; and by 25% of the flow through each of four inlet fluid-passing openings 36A, 36B, 36C and 36D. Again, it can be seen that if, for example, fluid-passing openings 36A, 46A or 56A should become clogged, the remaining inlet fluid-passing openings 36B, 36C, 36D, second fluid-passing openings 46B, 46C and third fluid-passing opening 56B would supply the discharge fluid-passing opening 66.

With reference to Figures 36 through 39, yet another embodiment of a hose manufactured in accordance with the subject invention will be described. This embodiment is characterized by the provision of a flow-restricting passage in the form of a serpentine or zig-zag path. With specific reference to Figure 36, the structure associated with creating this path may be described. An elongated flat ribbon 202 of plastic material passes through a molding operation (to be described in detail hereinafter) in order to create the flow-restricting path or channel 14. After molding, the sheet 202 as oriented in Figure 38 contains a planar top surface 204 and a planar bottom surface 206. The sheet also defines right edge 208 and left edge 212. Extending outwardly away from surface 206 and along each of the edges 208 and 212 are associated strips 30 and 40. Each strip extends in a generally longitudinal direction and is essentially parallel with the longitudinal axis A of the hose 210.

The strips are arranged so that they define a space between each other. This space with additional structure will become the passage 14. Positioned periodically within the space and emanating from each of the strips 30 and 40 are a series of transverse fingers 214. The fingers associated with strip 30 and the fingers associated with strip 40 are arranged in an interdigitated fashion at a predetermined spacing from each other.

In order to create a fluid communication between the path 14 and the main supply channel 12, a series of openings 36', which define an inlet station 36, are molded into the strip 30. In like manner, in order to create an exit or discharge opening for water escaping from the channel 14, there is provided in strip 40 a series of three closely spaced outlets 46' constituting an outlet station 46.

As can be seen, with reference to Figure 37, each inlet channel 36 being formed in strip 30 is essentially opposite each outlet 46 formed in strip 40. However, through the provision of a ridge 218 placed into channel 14, the inlets and outlets are separated from each other so that for each flow restricting channel 14 there is only one inlet station 36 associated with a specific downstream outlet station 46.

As the flow moves from an inlet station 36 to its flow connecting outlet station 46, the serpentine design of the flow-restricting path 14 makes it necessary for the water to travel a total distance which is substantially equal to three times the shortest distance between the inlet station 36 and its associated outlet station 46. Additional friction and pressure drop is created because the flow has to make two right angle turns as it moves past each transverse finger 214, as shown by arrows 371 and 373. The pressure created by the combination of the longer flow path and the numerous right angle turns permits the flow path 14 to have a larger cross section in order to provide less chance of clogging while still maintaining the same flow rate.

Beginning at a pressure of 0,55 bar (8 psi) in the main supply channel 12, there is approximately a 0,545 bar (7.9 psi) pressure drop within the flow-restricting channel 14 and a further pressure drop of about 0,007 bar (0,1 psi) as the flow is discharged from the outlet openings 46'.

Figure 38 illustrates the approximate shape of common wall 24 as it is in its pressurized position 27A within passage 14 near to but downstream of inlet station 36. The common wall 16 maintains essentially the same contour as the outer margin 26 because the pressure within the channel 14 is essentially the same as the pressure in the main supply channel 12 at this point.

Figure 39 illustrates the outward deflection of the common wall 16 at point 27B due to the approximate 0,545 bar (7.9 psi) pressure differential between the main supply channel 12 and the flow-restricting channel 14 at this point. The pressured position 27B is within passage 14 near to but upstream of outlet station 46. This deflection of the common wall at 27B reduces the size and the flow of the flow-restricting channel 14. When the hose is operating under very low pressure, as occurs at the beginning and end of each watering cycle, the common wall 16 at point 27B returns to its normal position (like 27A in Figure 38) and allows any accumulated foreign particles to flush out through the full size channel 14.

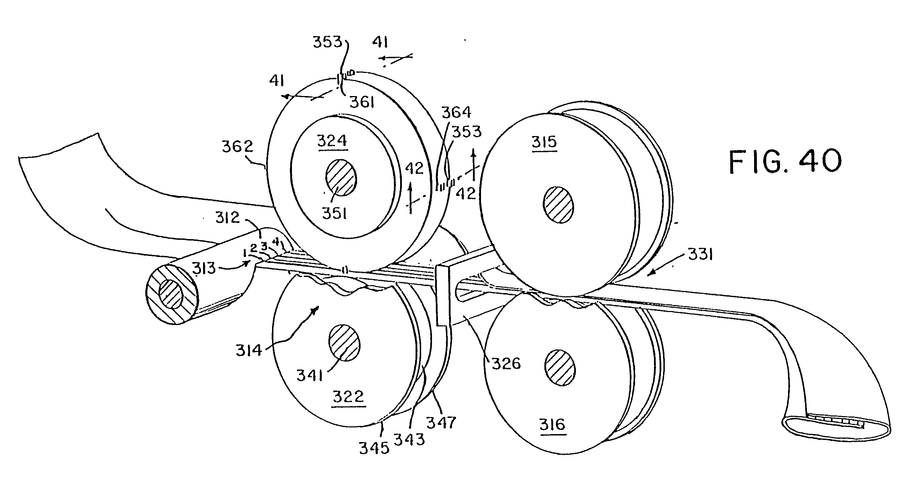

With reference to Figures 40 through 46, the method and apparatus of the subject invention are disclosed.

Basically, the method and apparatus contemplate the disposition of a plurality of thermoplastic hot melt beads in a parallel relationship extending longitudinally along the exterior surface of one of the margins of an elongated film. The film is continually advanced and passes through a molding or forming station where each of the beads is deformed according to a predetermined pattern to create the various inlet and outlet stations found in the final hose. The film continues to advance and eventually passes through a guide which causes the interior surface along the other margin to be disposed about the beads. The film then advances through the nip of a pair of forming wheels and emerges as the finally assembled hose.

With continued reference to Figures 40 through 46, the details of the method and apparatus will now be described.

Initially, the impervious film is produced in a flat state. The film is introduced into the machine by placing it in its flat state under the nozzle 312 of a conventional extrusion nozzle where hot melt beads 313 are being extruded, and, at the same time, between the nip of the opposed rolls 322 and 324, which constitute the molding station 314. The film is also folded back upon itself and passed through a stationary guide member 326 located downstream of the molding station. The film, after passing through the guide station, is received within the nip of a pair of forming wheels 315 and 316, which constitute the forming station 331. The film emerges from the forming station as the complete hose. During production, the hose is continually advanced by the rotation of the forming wheels.

Figures 40 through 43 illustrate the details of the molding station 314 which basically comprises a pair of rotating wheels 322 and 324. Wheel 322 constitutes a bottom wheel and is mounted for rotation on an axis 341. Wheel 322 contains a flat cylindrical portion 343 bounded on either side by a pair of flange portions 345 and 347.

Wheel 324, which constitutes a top or molding wheel, is disposed above wheel 322 and rotates about an axis 351 which is essentially parallel to the rotation axis 341 of the bottom wheel. Wheel 324 has disposed about its periphery a number of teeth 353 positioned in a predetermined arrangement in order to produce a desired indentation pattern in the finished hose.

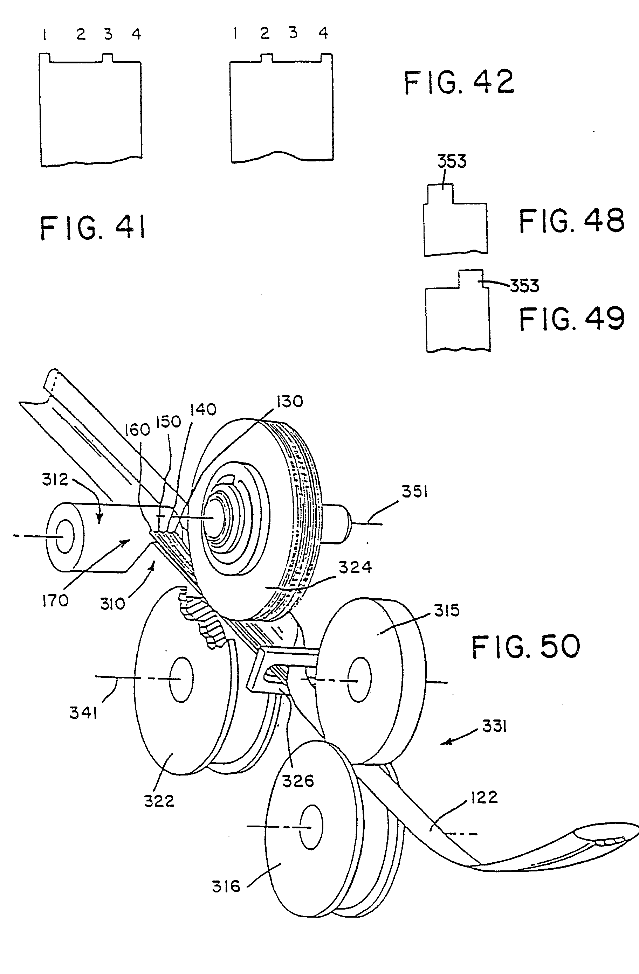

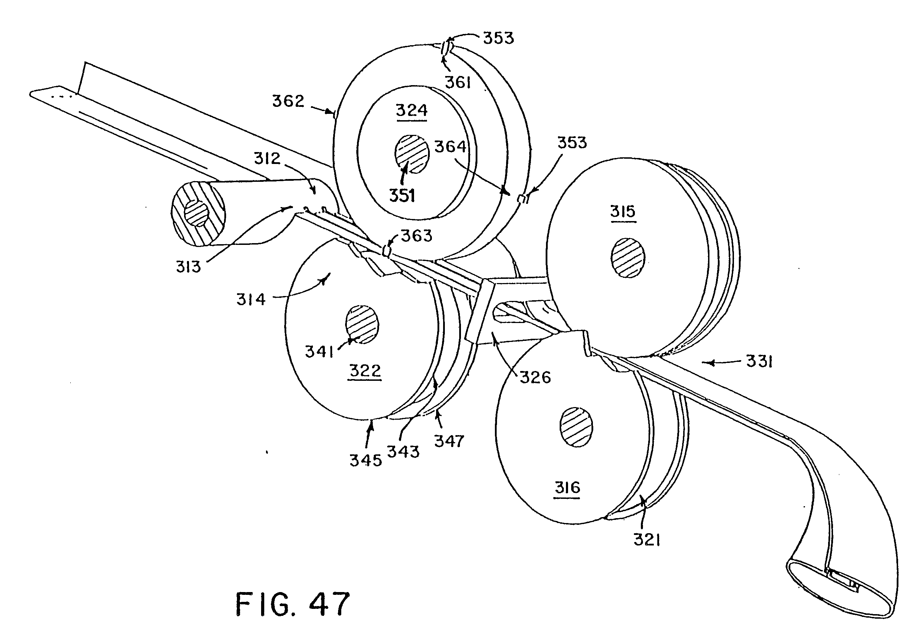

Figures 40 through 42 provide an example of the type of wheel configuration that will produce a hose having an inlet and outlet pattern such as that shown for the hose in Figures 1 through 4. For this arrangement, the wheel 324 has a 40 cm (16-inch) circumference. Four molding assemblies 361 through 364, each of which contains a predetermined arrangement of teeth 353, are disposed about the circumference at 90° intervals. Figure 41 shows a sectional view of the arrangement of teeth for assemblies 361 and 363, whereas Figure 42 shows such an arrangement for assemblies 362 and 364. As can be seen, beads 1 and 3 are indented at the same time. Beads 2 and 4 are also indented at the same time. In this way, the desired pattern shown in Figure 4 is produced. Typically, the teeth have a thickness in the range from about 0,075 cm (0,030 inch) to about 0,23 cm (0,090 inch) depending on the desired space between the strips.

The circumferences of the wheels 322 and 324 are arranged relative to each other to provide a nip or space therebetween for receiving the thermoplastic film and the plurality of hot melt beads.

The film and beads pass between the nip rolls 322 and 324 which rotate at the same speed that the film and beads are travelling. As a hot melt bead passes under the teeth in the top nip roll 324, each bead is molded into separate longitudinal strips. The top nip roll is spaced from the bottom nip roll at a distance so that, when the film and beads pass between the nip rolls, beads are slightly flattened within the space between the top and bottom nip rolls.

It is understood that, while the preferred method is to start with film and lay hot melt beads on the film after which the beads are molded into strips, an alternate method and apparatus is to extrude a one-piece flat sheet with parallel longitudinal ridges formed along one margin as it leaves the extrusion die. As an equivalent of the film and beads in the preferred embodiment, the flat strip with longitudinal ridges, while still hot, then passes through a station to mold the strips as in the preferred embodiment.

While the preferred embodiment describes a rotary molding station, the scope of this invention also includes any method and apparatus for advancing the film and bead and bringing a mold into contact with the hot melt bead and molding longitudinally spaced apart parallel strips which are used for the purpose of sealing the hose forming fluid-restricting passages, and permitting flow both between the parallel fluid passages and also to the exterior of the hose. One such method and apparatus would be moving the film and bead under a mold, stopping the film and bead momentarily while an overhead molding die comes down upon the beads to create the strips, then raising the mold die and again advancing the film and beads thereby, by repeated operation, making a continual row of parallel and longitudinal hot strips which are then formed into the hose as in the preferred embodiment.

Figures 47 through 49 provide an example of the type of configuration that will produce a hose having an inlet and outlet pattern such as that shown for the hose in Figures 18 through 23. For this arrangement, the wheel 324 has a 40 cm (16-inch) circumference. Four molding assemblies 361 through 364, each of which contains a predetermined arrangement of teeth 353, are disposed about the circumference at 90° intervals. Figure 48 shows a sectional view of the arrangement of teeth for assemblies 361 and 363, whereas Figure 49 shows such an arrangement for assemblies 362 and 364. Typically, the teeth have a thickness in the range from about 0,075 cm (0,030 inch) to about 0,23 cm (0,090 inch) depending on the desired space between the strips.

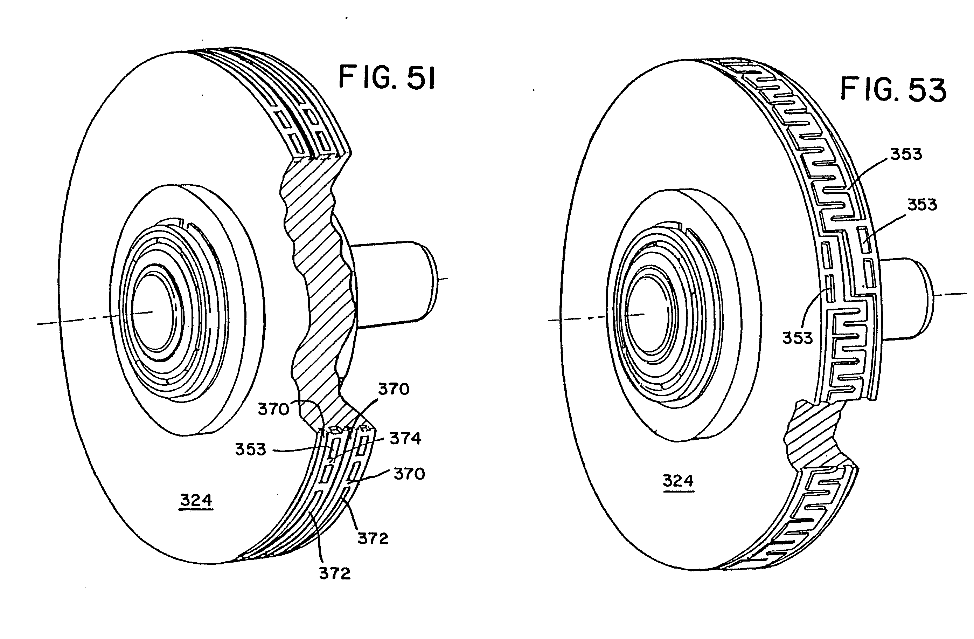

With reference to Figures 50 and 51, a method and apparatus for manufacturing a hose similar to that shown in Figure 20 are disclosed. Because the method and apparatus are similar to those shown in Figures 47 through 49, only the differences will be described.

Basically, the method and apparatus of Figures 50 and 51 contemplate the disposition of a thermoplastic hot melt in a parallel relationship extending longitudinally along the interior surface of the sheet. The sheet is placed into contact with the interior surface of margin 126 of film 122 and is continually advanced until it passes through the molding or forming station 314 where each of the ridges is deformed according to a predetermined pattern to create the various inlet and outlet stations found in the final hose. The film continues to advance and eventually passes through a guide which causes the exterior surface along the other margin 124 to be disposed about the beads. The film then advances through the nip of a pair of forming wheels 315 and 316 and emerges as the finally assembled hose. See Figures 25 and 33 for cross sections of hoses produced by the method as the hoses emerge from the forming wheels 315 and 316. Figure 25 shows a hose having one flow-restricting passage 14, whereas Figure 33 shows a hose having three flow-restricting passages 118, 119 and 120.

The major differences between the method of Figure 50 and that of Figure 47 is in the molding wheel and the way in which the film is introduced into the machine.

Initially, the impervious film 122 is produced in a flat state. The film 122 is introduced into the machine by placing it in its flat state under the nozzle 312 of a conventional extrusion nozzle where the sheet 170 with ridges is being extruded, and, at the same time, between the nip of the opposed rolls 322 and 324, which constitute the molding station 314. The film is also folded back upon itself in a manner opposite to that shown in Figure 47 and passed through a stationary guide member 326 located downstream of the molding station. The film, after passing through the guide station, is received within the nip of a pair of forming wheels 315 and 316, which constitute the forming station 331. The film emerges from the forming station as the complete hose. During production, the hose is continually advanced by the rotation of the forming wheels.

Wheel 324, which constitutes the molding wheel, is disposed above wheel 322 and rotates about an axis 351 which is essentially parallel to the rotation axis 341 of the bottom wheel. Wheel 324 has disposed about its periphery a number of indentations 353, circumferential grooves 370, 372, and cross members 374 positioned in a predetermined arrangement to produce the desired pattern of passages and stations in the finished hose such as that shown in Figure 20.

Finally, the reference to Figures 52 and 53, a method and apparatus for manufacturing a hose similar to that shown in Figure 23 are disclosed. Because the method and apparatus are similar to those shown in Figures 50 and 51, only the differences will be described.

Basically, the method and apparatus of Figures 52 and 53 contemplate the disposition of a thermoplastic hot melt ribbon 202 in a parallel relationship extending longitudinally along the interior surface on one of the margins 26 of elongated film 22. The film and ribbon are continually advanced and pass through a molding or forming station 314 where the ribbon is deformed according to a predetermined pattern to create the various inlet and outlet stations and serpentine passageways 14 found in the final hose. The film continues to advance and eventually passes through a guide which causes the exterior surface along the other margin 24 to be disposed about the beads. The film then advances through the nip of a pair of forming wheels and emerges as the finally assembled hose.

The major difference between the method of Figure 52 and that of Figure 50 is in the molding wheel. In all other respects, the method and apparatus are substantially the same.

Wheel 324, which constitutes the molding wheel, is disposed above wheel 322 and rotates about an axis 351 which is essentially parallel to the rotation axis 341 of the bottom wheel. Wheel 324 has disposed about its periphery a number of indentations 353 positioned in a predetermined arrangement in order to produce the desired pattern in the finished hose shown in Figure 37.

An alternate method and apparatus, applicable to any of the three methods just described, is to extrude a one-piece flat sheet to create a composite of the film 122 with appropriate structure formed along one margin as it leaves the extrusion die. For the embodiment of Figure 47, the appropriate structure includes parallel longitudinal ridges equivalent to beads 30 and 40. In the case of the embodiment of Figure 50, the structure is similar to sheet 170, whereas for Figure 52, the structure is similar to ribbon 202. The flat sheet with appropriate structure, while still hot, then passes through a station to mold the structure of the preferred embodiment.

While descriptions herein have generally referred to water and fluid passages, it is understood the same hose can be used for chemical solutions such as insecticides, fungicides, fertilizers and also compressed air for soil aeration.

Since there is a wide variety of conditions encountered in the field, it is understood that the preferred embodiments are just a few of the many combinations of ratios and sizes of first fluid-passing openings, spacing of second fluid-passing openings, spacing of discharge fluid-passing openings, cross section of the fourth fluid passages, and pressures introduced into the main supply channel, which may be manufactured in accordance with this invention.

## Claims

1. Apparatus for manufacturing an elongated fluid-distributing hose from an elongated plastic film, comprising means (315, 316) for moving the film in a direction that is essentially parallel to the longitudinal axis of the film, folding means (326) for folding the film about its longitudinal axis so that a portion of one of the two surfaces of the film extending along one of the longitudinal margins of the film overlies a portion of the other surface of the film extending along the other longitudinal margin of the film, and means (315, 316) for securing at least one of the marginal edges in order to form a hose, characterized in that it further comprises: means for orienting the film to expose said portion of the other of said two surfaces extending along the other longitudinal margin of the film; extrusion nozzle means (312) for extruding at least one plastic bead, said nozzle means being oriented relative to said exposed portion of said other surface of the film so that said at least one bead is disposed on said surface portion essentially parallel to the longitudinal axis of the film; and molding means (322, 324) for periodically creating a permanent depression in said at least one bead, whereby said folding means and securing means are such that the said portion of the said one surface of the film overlies, comes into contact with and is secured to said at least one bead.

2. The apparatus of claim 1, wherein the said extrusion nozzle means (312) extrudes a plastic sheet with at least one bead thereon, so that said plastic sheet is disposed on the said exposed surface portion of the film.

3. The apparatus of claim 1 or 2, wherein said at least one plastic bead is a plurality of plastic beads and said nozzle means (312) disposes said plastic beads in an array of adjacently arranged, essentially parallel plastic beads.

4. The apparatus of claim 1 or 2, wherein said means for moving comprises a pair of opposed forming wheels (315, 316) defining a nip through which said film is drawn during the rotation of said forming wheels.

5. The apparatus of claim 1 or 2, wherein said molding means (322, 324) comprises at least one molding tooth (353) movable toward and away from said at least one bead to create said permanent depression.

6. The apparatus of claim 5, further comprising a molding wheel (322, 324), means for mounting said tooth (353) at a predetermined location on the periphery of said wheel, and means (351, 341) for rotating said wheel.

7. A method of manufacturing an elongated fluid-distribution hose from an elongated plastic film, comprising moving the film in a direction that is essentially parallel to the longitudinal axis of the film, folding the film about its longitudinal axis so that a portion of one of the two surfaces of the film extending along one of the longitudinal margins of the film overlies a portion of the other surface of the film extending along the other longitudinal margin of the film, and securing at least one of the marginal edges in order to form a hose, characterized in that it further comprises, prior to said folding, orienting the film to expose a portion of the other of said two surfaces extending along the other longitudinal margin of the film; extruding at least one plastic bead; disposing said at least one bead on said exposed portion of said other surface of the film so that said at least one bead is essentially parallel to the longitudinal axis of the film; and periodically creating a permanent depression in said at least one bead, whereby said folding and securing are such that the said portion of the said one surface of the film overlies, comes into contact with and is secured to said at least one bead.

8. The method of claim 7, wherein said at least one plastic bead is a plurality of plastic beads and said disposing step includes disposing said plastic bead in an array of adjacently arranged, essentially parallel plastic beads.

9. The method of claim 7, wherein said moving step comprises drawing said film through the nip of a pair of opposite rotating forming wheels.

10. The method of claim 7, further comprising the step of providing said film as a flat sheet.

11. The method of claim 7, wherein said molding step comprises moving at least one molding tooth toward and away from said at least one bead to create said permanent depression.

12. The method of claim 11, further comprising the step of mounting said tooth at a predetermined location on the periphery of a molding wheel, and rotating said wheel to cause said tooth to create said permanent depression.

**Patentansprüche**

1. Vorrichtung zur Herstellung eines langgestreckten Flüssigkeitsverteiler-Schlauches aus einer langgestreckten Kunststoffolie, bestehend aus Einrichtungen (315, 316) zur Bewegung der Folie in einer im wesentlichen parallel zur Längsachse der Folie verlaufenden Richtung, einer Falteinrichtung (326), mit denen die Folie so um ihre Längsachse gefaltet wird, daß ein Teil einer der beiden Folienoberflächen, der sich entlang eines der Längsränder der Folie erstreckt, mit einem Teil der anderen Folienoberfläche, der sich entlang des anderen Längsrandes der Folie erstreckt, überlappt, und Einrichtungen (315, 316), mit denen mindestens eine der Randkanten verbunden wird, um einen Schlauch zu bilden, dadurch gekennzeichnet, daß sie zusätzlich umfaßt: Einrichtungen mit denen die Folie so ausgerichtet wird, daß der genannte Teil der anderen Folienoberflächen, der sich entlang des anderen Längsrades der Folie erstreckt, freiliegt; eine Extrusionsdüse (312) zur Extrusion mindestens eines Kunststoffwulstes, wobei die Extrusiondüse dem genannten freiliegenden Teil der genannten anderen Folienoberfläche zugewandt ist, so daß mindestens ein Wulst auf den genannten Teil der Oberfläche im wesentlichen parallel zur Längsachse der Folie aufgebracht wird; eine Formpreß-Einrichtung (322, 324), mit welcher in regelmäßigen Abständen eine bleibende Vertiefung in den genannten zumindest einen Wulst eingebracht wird, wobei durch die Einrichtungen zum Falten und Festmachen bewirkt wird, daß der genannte Teil der genannten einen Folienoberflächen mit dem genannten zumindest einen Wulst in Überlappung gebracht wird, in Kontakt kommt und verbunden wird.

2. Vorrichtung gemäß Anspruch 1, dadurch gekennzeichnet, daß die genannte Extrusions-Düse (312) ein Kunststoffband mit mindestens einem darauf befindlichen Wulst extrudiert und das genannte Kunststoffband auf den genannten freiliegenden Teil der Folienoberfläche aufgebracht wird.

3. Vorrichtung nach Anspruch 1 oder 2, dadurch gekennzeichnet, daß eine Mehrzahl der genannten Kunststoffwülste durch die Düseneinrichtung (312) in einer regelmäßigen Anordnung, nebeneinanderliegend und im wesentlichen parallel zueinander aufgebracht werden.

4. Vorrichtung nach Anspruch 1 oder 2, dadurch gekennzeichnet, daß die Einrichtung zur Bewegung der Folie aus zwei einander gegenüberliegenden Formrädern (315, 316) besteht, die einen Spalt definieren, durch welchen die genannte Folie bei Drehung der genannten Formräder gezogen wird.

5. Vorrichtung nach Anspruch 1 oder 2, dadurch gekennzeichnet, daß die genannte Formpress-Einrichtung (322, 324) mit mindestens einem Formzahn (353) versehen ist, der sich dem genannten Wulst bzw. den Wülsten zu- und von diesen wieder wegbewegt, um die genannten Vertiefungen hervorzubringen.

6. Vorrichtung nach Anspruch 5, dadurch gekennzeichnet, daß ein Formpress-Rad (322, 324) und Einrichtungen zum Anbringen des genannten Zahnes (353) an einer vorherbestimmten Stelle an der Außenseite des genannten Rades und Einrichtungen (351, 341) zur Durchführung der Drehbewegung des genannten Rades vorgesehen sind.

7. Verfahren zur Herstellung eines langgestreckten Flüssigkeitsverteiler-Schlauches aus einer langgestreckten Kunststoffolie, bei welchem die Folie in eine im wesentlichen parallel zur Längsachse der Folie verlaufende Richtung bewegt wird und bei welchem die Folie so um ihre Längsachse gefaltet wird, daß ein Teil einer der beiden Folienoberflächen, der sich entlang eines der Längsränder der Folie erstreckt, mit einem Teil der anderen Folienoberfläche, der sich entlang des anderen Längsrandes der Folie erstreckt, überlappt, und wobei mindestens eine der Randkanten verbunden wird, um einen Schlauch zu bilden, dadurch gekennzeichnet, daß zusätzlich vor dem genannten Umfalten die Folie so ausgerichtet wird, daß ein Teil der anderen der beiden Folienoberflächen, der sich entlang des anderen Längsrades der Folie erstreckt, freiliegt; daß mindestens ein Kunststoffwulst extrudiert wird; daß der zumindest ein Kunststoffwulst auf den genannten freiliegenden Teil der genannten anderen Oberfläche der Folie aufgebracht wird, sodaß der zumindest eine Wülst im wesentlichen parallel zur Längsachse der Folie verläuft; daß in regelmäßigen Abständen eine bleibende Vertiefung in den zumindest einen Wulst eingebracht wird, wobei das Umfalten und Verbinden so erfolgen, daß der genannte Teil der genannten einen Folienoberfläche mit dem zumindest einen Wulst in Überlappung gebracht wird, in Kontakt kommt und verbunden wird.

8. Verfahren nach Anspruch 7, dadurch gekennzeichnet, daß im genannten Aufbringungsschritt eine Mehrzahl der genannten Kunststoffwülste in einer regelmäßigen Anordnung, nebeneinanderliegend und im wesentlichen parallel zueinander, aufgebracht werden.

9. Verfahren nach Anspruch 7, dadurch gekennzeichnet, daß die Weiterbewegung der Folie so erfolgt, daß die Folie durch den Spalt zweier einander gegenüberliegender, sich drehender Formräder gezogen wird.

10. Verfahren nach Anspruch 7, dadurch gekennzeichnet, daß die genannte Folie als Flachband bereitgestellt wird.

11. Verfahren nach Anspruch 7, dadurch gekennzeichnet, daß das Formpressen derart erfolgt, daß mindestens ein Formzahn sich dem genannten Wulst bzw. den Wülsten zu- und von diesen wieder wegbewegt, um die genannten bleibenden Vertiefungen hervorzubringen.

12. Verfahren nach Anspruch 11, dadurch gekennzeichnet, daß mindestens ein Zahn an einer vorherbestimmten Stelle am Umfang eines Formpress-Rades angebracht wird und die genannten bleibenden Vertiefungen durch Drehung des Rades hervorgebracht werden.

**Revendications**

1. Appareil destiné à la fabrication d'un tuyau allongé de distribution de fluide à partir d'une pellicule en matière plastique, comportant des moyens (315, 316) servant à déplacer la pellicule dans une direction qui est essentiellement parallèle à l'axe longitudinal de la pellicule, des moyens de pliage (326) servant à plier la pellicule autour de son axe longitudinal de sorte qu'une partie de l'une des deux surfaces de la pellicule s'étendant le long de l'une des marges longitudinales de la pellicule recouvre une partie de l'autre surface de la pellicule s'étendant le long de l'autre marge longitudinale de la pellicule, et des moyens (315, 316) servant à fixer au moins l'un des bords marginaux afin de former un tuyau, caractérisé en ce qu'il comporte en outre: des moyens servant à orienter la pellicule pour exposer ladite partie de l'autre desdites deux surfaces s'étendant le long de l'autre marge longitudinale de la pellicule; des moyens de buse d'extrusion (312) servant à extruder au moins un cordon en matière plastique, lesdits moyens de buse étant orientés par rapport à ladite partie exposée de ladite autre surface de la pellicule de sorte qu'au moins un cordon soit disposé sur ladite partie de surface de manière à être essentiellement parallèle à l'axe longitudinal de la pellicule; et des moyens de moulage (322, 324) servant à créer périodiquement une dépression permanente dans ledit cordon au nombre d'au moins un, lesdits moyens de pliage et lesdits moyens de fixation étant tels que ladite partie de ladite première surface de la pellicule recouvre ledit cordon au nombre d'au moins un, entre en contact avec celui-ci et y est fixée.

2. Appareil selon la revendication 1, dans lequel lesdits moyens de buse d'extrusion (312) extrudent une feuille en matière plastique sur laquelle se trouve au moins un cordon de sorte que ladite feuille en matière plastique soit disposée sur ladite partie de surface exposée de la pellicule.

3. Appareil selon la revendication 1 ou la revendication 2, dans lequel ledit cordon en matière plastique au nombre d'au moins un est une multiplicité de cordons en matière plastique et lesdits moyens de buse (312) placent lesdits cordons en matière plastique de manière à former un ensemble de cordons en matière plastique essentiellement parallèles, adjacents les uns aux autres.

4. Appareil selon la revendication 1 ou la revendication 2, dans lequel lesdits moyens de déplacement comportent une paire de roues de formage opposées (315, 316) définissant un intervalle à travers lequel ladite pellicule est tirée pendant la rotation desdites roues de formage.

5. Appareil selon la revendication 1 ou la revendication 2, dans lequel lesdits moyens de moulage (322, 324) comportent au moins une dent de moulage (353) apte à être rapprochée et écartée dudit cordon au nombre d'au moins un pour créer ladite dépression permanente.

6. Appareil selon la revendication 5, comportant en outre une roue de moulage (322, 324), des moyens servant à monter ladite dent (353) à un emplacement prédéterminé sur la périphérie de ladite roue, et des moyens (351, 341) servant à faire tourner ladite roue.

7. Méthode de fabrication d'un tuyau allongé de distribution de fluide à partir d'une pellicule allongée en matière plastique, comportant le déplacement de la pellicule dans une direction qui est essentiellement parallèle à l'axe longitudinal de la pellicule, le pliage de la pellicule autour de son axe longitudinal de sorte qu'une partie de l'une des deux surfaces de la pellicule s'étendant le long de l'une des marges longitudinales de la pellicule recouvre une partie de l'autre surface de la pellicule s'étendant le long de l'autre marge longitudinale de la pellicule, et la fixation d'au moins l'un des bords marginaux afin de former un tuyau, caractérisée en ce qu'elle comporte en outre, avant ledit pliage, l'orientation de la pellicule de manière à exposer une partie de l'autre desdites deux surfaces s'étendant le long de l'autre marge longitudinale de la pellicule; l'extrusion d'au moins un cordon en matière plastique; le placement dudit cordon au nombre d'au moins un sur ladite partie exposée de ladite autre surface de la pellicule de sorte que ledit cordon au nombre d'au moins un soit essentiellement parallèle à l'axe longitudinal de la pellicule; et la création périodique d'une dépression permanente dans ledit cordon au nombre d'au moins un, lesdits moyens de pliage et de fixation étant tels que ladite partie de ladite première surface de la pellicule recouvre ledit cordon au nombre d'au moins un, entre en contact avec lui et y est fixée.

8. Méthode selon la revendication 7, dans laquelle ledit cordon en matière plastique au nombre d'au moins un est une multiplicité de cordons en matière plastique et en ce que ladite étape de placement comprend le placement desdits cordons en matière plastique de manière à former un ensemble de cordons en matière plastique essentiellement parallèles, adjacents les uns aux autres.

9. Méthode selon la revendication 7, dans laquelle ladite étape de déplacement comprend le tirage de ladite pellicule à travers l'intervalle entre une paire de roues de formage opposées en rotation.

10. Méthode selon la revendication 7, comportant en outre l'étape consistant à réaliser ladite pellicule sous la forme d'une feuille plate.

11. Méthode selon la revendication 7, dans laquelle ladite étape de moulage comporte le rapprochement et l'éloignement d'au moins une dent de moulage dudit cordon au nombre d'au moins un pour créer ladite dépression permanente.

12. Méthode selon la revendication 11, comportant en outre l'étape consistant à monter ladite dent à un emplacement prédéterminé sur la périphérie d'une roue de moulage, et à faire tourner ladite roue pour entraîner la création de ladite dépression permanente par ladite dent.

FIG. 1

FIG. 2

FIG. 3

FIG. 4

EP 0 091 059 B1

FIG. 5

FIG. 6

FIG. 9

FIG. 7

FIG. 8

FIG. II

FIG. 10

FIG. 12

FIG. 14

FIG. 15

FIG. 13

FIG. 16

FIG. 17

FIG. 18

7

FIG. 19

FIG. 20

FIG. 21

FIG. 22

FIG. 31

FIG. 24

FIG. 23

FIG. 27

FIG. 28

FIG.37

FIG.36

FIG.26

FIG. 33

FIG. 25

FIG. 29

FIG. 30

12

FIG. 32

FIG. 35

FIG. 43

FIG. 44

FIG. 45

FIG. 34

FIG. 46

EP 0 091 059 B1

FIG. 38

FIG. 39

FIG. 52

FIG. 40

FIG. 42

FIG. 41

FIG. 48

FIG. 49

FIG. 50

FIG. 47

EP 0 091 059 B1

FIG. 53

353
353
353
324

FIG. 51

370
374
370
372
370
353
372
324